# EUROPEAN PATENT SPECIFICATION

(11) **EP 2 288 632 B1**
(45) Date of publication and mention of the grant of the patent: **05.04.2017**
(21) Application number: 09757390.1
(22) Date of filing: 16.05.2009
(51) Int. Cl.: C08F 220/58, C09J 133/24, C09D 133/14, C09D 133/16, C09D 133/26, C08F 220/34

(54) **MULTIFUNCTIONAL COATINGS**
MULTIFUNKTIONSBESCHICHTUNGEN
Revêtements multifonctionnels

(30) Priority: 06.06.2008 EP 08157810
(43) Date of publication of application: 02.03.2011
(73) Proprietor: Université de Liège, 4031 Angleur (BE)
(72) Inventor: VAN DE WEERDT, Cécile, B-4140 Sprimont (BE); DETREMBLEUR, Christophe, B-4130 Esneux (BE); CHARLOT, Aurelia, F-69100 Villeurbanne (FR); JEROME, Robert, B-4845 Sart-Jalhay (BE); VREULS, Christelle, B-4670 Blegny (BE); ZOCCHI, Germaine, B-4161 Villers-aux-tours (BE)
(86) International application number: PCT/EP2009/055960
(87) International publication number: WO 2009/147007

(56) References cited:
- WO-A-2008/019352

## Description

The present invention is directed to the field of functional polymer surface coatings.

Polymer films which can be applied to organic or inorganic surfaces may be used to impart various properties to the underlying support. For example, stainless steel is widely used among metals in everyday life but also in the medical field, especially to prepare implants dedicated to orthopedic surgery and other medical devices due to its corrosion resistance and relevant mechanical properties. One possible limitation of prostheses in stainless steel for biomedical applications is their inability to stop bacteria proliferation. The surface of medical devices is a site of bacterial adhesion, prone to the formation of a resistant biofilm leading frequently to chronic infection. In order to control the formation of unwanted biofilms at the surface and to prevent such complications, several surface modifications were developed to confer to the surface antibacterial properties.

The layer-by-layer assembly (LBL) method, that consists of making a multilayer thin film based on the alternate deposition of oppositely charged polyelectrolyte layers has attracted interest because of the simplicity and versatility of the technique (EP 0 472 990 A2; EP 0 647 477 A1; Decher, G. Science, 1997, 277, 1232 ; Decher, G.; Schlenoff, J. B.; Eds.; Multilayer thin films: Sequential Assembly of Nanocomposite Materials; Wiley-VCH: Weinheim, Germany, 2003). Moreover, it is an environmentally friendly process that allows the elaboration of functional surfaces with precise architectural and chemical control at the nanoscale. This procedure can be adapted to almost any type of metallic surface but requires, in most cases, some level of pre-treatment of the substrates to enhance the adhesion of the first polyelectrolyte layer onto the inorganic surface. Most of these treatments aim at charging the surface allowing in this manner electrostatic interactions with the first deposited polyelectrolyte layer. For this goal, chemical modification of the surface (Fu, J.; Ji, J.; Yuan, W.; Shen, J. Biomaterials, 2005, 26, 6684), corona-treatment (Grunlan, J. C.; Choi, J. K.; Lin, A. Biomacromolecules, 2005, 1149), dipping in a surfactant acidic solution (Etienne, O.; Picart, C.; Taddei, C.; Haikel, Y.; Dimarcq, J.L.; Schaaf, P.; Voegel, J.C.; Ogier, J.A.; Egles, C. Antimicrobial Agents and Chemotherapy, 2004, 48, 3662) were reported and the most frequently used method consists of dipping the substrate in a polyethyleneimine solution (Ma, R.; Sasaki, T.; Bando, Y. J. Am. Chem. Soc., 2004, 126, 10382; Cochin, D.; Laschewsky, A. Macromol. Chem. Phys., 1999, 200, 609; Dai, J.; Bruening, M. L. Nano Letters, 2002, 2, 497; Etienne, O.; Gasnier, C.; Taddei, C.; Voegel, J-C.; Aunis, D.; Schaaf, P.; Metz-Boutigue, M-H.; Bolcato-Bellemin, A-L.; Egles, C. Biomaterials, 2005, 26, 4568) as this polymer is known to chelate with a wide variety of transition metals. The interaction of this first layer with the inorganic surface is thus mainly electrostatic and the strength of this bonding may not be sufficient under certain conditions. Additionally, long term applications for the multilayer films would require a strong and durable interaction with the substrate.

In order to duplicate the adhesive characteristics of so called "mussel adhesive proteins" (MAPs), natural substances which are known to give rise to a stable adhesion to various surfaces, considerable efforts have been devoted to the development of synthetic biomimetic adhesive polymers. In many of these polymers, DOPA, which is thought to be responsible for the adhesive effect of MAPs has been incorporated in the polymer backbones, side chains or endgroups Yu, M.; Hwang, J.; Deming, T. J. J. Am. Chem. Soc., 1999, 121, 5825; Yamamoto, H.; Hayakawa, T. Biopolymers, 2004, 18, 3067; Lee, B. P.; Dalsin, J. L.; Messersmith, P. B. Biomacromolecules, 2002, 3, 1038; Huang, K.; Lee, B. P.; Ingram, D. R.; Messersmith, P. B. Biomacromolecules, 2002, 3, 397; Huang, K.; Lee, B.; Messersmith, P. B. Polymer Preprints, 2001, 42, 147; Yu, M.; Deming, T. J. Macromolecules, 1998, 31, 4739. Such synthetic polymers include hydrogels for medical applications, for example obtained by copolymerizing a N-methacrylated DOPA monomer with PEG-diacrylate using ultraviolet irradiation (Lee, B. P.; Huang, K.; Nunalee, F. N.; Shull, K. R.; Messersmith, P. B. J. Biomater. Sci. Polymer Edn., 2004, 4, 449).

Furthermore, inducing durable or permanent antimicrobial activities to inorganic surfaces is also of high interest and is under current investigation by different research groups. Previous efforts have focused to use the layer-by-layer deposition technique to elaborate anti-microbial coatings that contain releasable bactericidal agents such as silver (Grunlan, J. C.; Choi, J. K.; Lin, A. Biomacromolecules, 2005, 1149 ; Dai, J.; Bruening, M. L. Nano Letters, 2002, 2, 497; Shi, Z.; Neoh, K. G.; Zhong, P.; Yung, L. Y. L.; Kang, E. T.; Wang, W. J. Biomed. Mater. Res. Part A, 2006, 76A, 826; Podsiadlo, P. ; Paternel, S.; Rouilard, J-M.; Zhang, Z.; Lee, J.; Lee, J-W.; Gulari, E.; Kotov, N. A. Langmuir, 2005, 21, 11915; Fu, J.; Ji, J.; Fan, D.; Shen, J. J. Biomed. Mater. Res. Part A, 2006, 79A, 665; Lee, D.; Cohen, R. E.; Rubner, M.F. Langmuir, 2005, 21, 965), cetrimide and antimicrobial peptides. Rubner and co-workers have prepared antibacterial coatings bearing silver release-killing and contact-killing capabilities (Li, Z.; Lee, D.; Sheng, X.; Cohen, R. E.; Rubner, M. F. Langmuir, 2006, 22, 9820). Most silver-containing antimicrobial films consist of elemental silver nanoparticles resulting from the chemical or photochemical reduction of Ag⁺ ions (Grunlan, J. C.; Choi, J. K.; Lin, A. Biomacromolecules, 2005, 1149; Dai, J.; Bruening, M. L. Nano Letters, 2002, 2, 497; Fu, J.; Ji, J.; Fan, D.; Shen, J. J. Biomed. Mater. Res. Part A, 2006, 79A, 665; Lee, D.; Cohen, R. E.; Rubner, M.F. Langmuir, 2005, 21, 9651;). The US patent application 2006/0241281 proposes peptidomimetic polymers for antifouling surfaces which comprise pendant dihydroxyphenyl groups, and preferably L-3,4-dihydroxyphenylalanine groups.

WO2008/019352 discloses polymeric compounds comprising dihydroxyphenyl derivatives used as coatings and having desired surface active effects.

Furthermore, the provision of stable organic coatings, especially on inorganic surfaces such as metal surfaces, is a field of continuous interest also outside the medical field. As exemplary functions of such coatings, corrosion protection, self-cleaning surfaces, aesthetic surfaces, such as painted surfaces, and catalytic surfaces can be mentioned, among others.

An object of the present invention is to provide a functional polymer coating for a broad variety of surfaces, such as a coating with antimicrobial activity, a coating which can act as an anchoring layer for further coatings imparting other desired properties to the surface, or a coating which can act as an effective glue between surfaces, which polymer coating ensures stable adhesion over an extended timescale and is easy to implement.

In order to solve this problem, the present invention provides a composite material comprising:
(i) a polyelectrolyte copolymer comprising:
   (a) a first type of identical or different units (A) each comprising one or more dihydroxyphenyl groups such that sidechains are present along the backbone of the polyelectrolyte copolymer which contain at least one dihydroxyphenyl group each, wherein a part or all of the dihydroxyphenyl groups have been oxidized to their quinone form; and
   (b1) a second type of identical or different units (B1) each comprising a cationic moiety, or
   (b2) a second type of identical or different units (B2) each comprising an anionic moiety, and (ii) biomolecules grafted to the polyelectrolyte copolymer via reaction of an oxidized dihydroxyphenyl group with an amino or thiol group present in the biomolecule.

The polyelectrolyte copolymers of the composite of the invention combine adhesive
properties imparted by the presence of the dihydroxyphenyl groups in the sidechains thereof with the possibility of incorporating substances which interact with the ionic groups contained in the copolymers or of assembling multilayer polyelectrolyte films of the polyelectrolyte layers.

In particular, the polyelectrolyte copolymers of the composite of the invention possess a
strong and water-resistant adhesion to various organic and inorganic surfaces and can be used as anchoring layer to form very stable polyelectrolyte multilayer films on such surfaces or to provide a stable basis for other types of organic coatings. Moreover, the dihydroxyphenyl groups in the polyelectrolyte copolymer of the composite of the invention can act as anticorrosive moieties due to their redox potential, and are thus able to provide anti-corrosive coatings for surfaces. Finally, the polyelectrolyte copolymer of the composite of the invention can provide anchoring groups for inorganic salts to impart certain desirable properties to the surfaces (e.g. sodium or strontium tetraborate for anticorrosive properties). Also, the polyelectrolyte copolymer of the composite of the invention provides reactive groups to covalently bind antimicrobial molecules, more particularly peptides and/or proteins from bacterial, fungal, vegetal, animal, human origin or any analogous chemical structures obtained by *de novo* design and chemical synthesis; coupling of the antimicrobial molecule can be made in solution or directly onto the surface once coated with the polyelectrolyte copolymer.

In another aspect, the invention provides a composite material comprising the polyelectrolyte material and particles of a metal and/or a metal salt. In this context, the dihydroxyphenyl groups can act as reducing agents for the in situ formation and the stabilization of metal particles and in particular metal nanoparticles. Such composite materials can impart durable functional properties to any surface coated with the material of the invention. In particular, metallic silver and/or silver halogenides can be embedded in a layer of the polyelectrolyte copolymer to provide antibacterial properties. Moreover, the invention provides a convenient method for the production of such a composite material via *in situ* reduction of a metal salt to form particles of the metal and/or *in situ* precipitation of a metal salt.

In yet another aspect, the present invention provides a substrate, such as a metal substrate, which carries on a surface thereof a composite material according to the invention. An example of such a substrate is a medical device coated with film providing antibacterial/antimicrobial properties to the surface of the device.

Due to their ionic nature, the composite materials according to the invention
may be prepared and applied to substrates in aqueous solvents or in water. Thus, they possess not only excellent characteristics as surface coatings, but are further environment friendly, since the use of organic solvents is not required during their polymerization or their use.

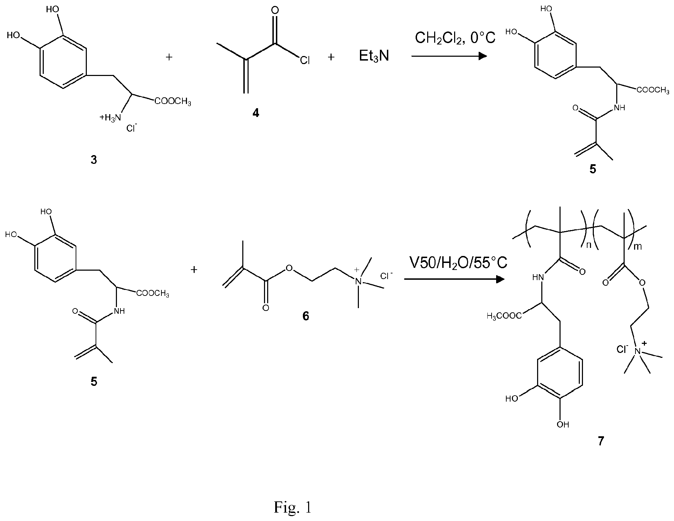

**Fig. 1** shows a scheme for the synthesis of *N*-methacryloyl 3,4-dihydroxyl-L-phenylalanine methyl ester hydrochloride **(5)** and its copolymerization to form P(DOPA)-*co*-P(DMAEMA⁺) copolymer **(7)** as a polyelectrolyte copolymer according to the invention. The structure of the polyelectrolyte in Fig. 1 represents a schematic illustration of the polyelectrolyte copolymer.

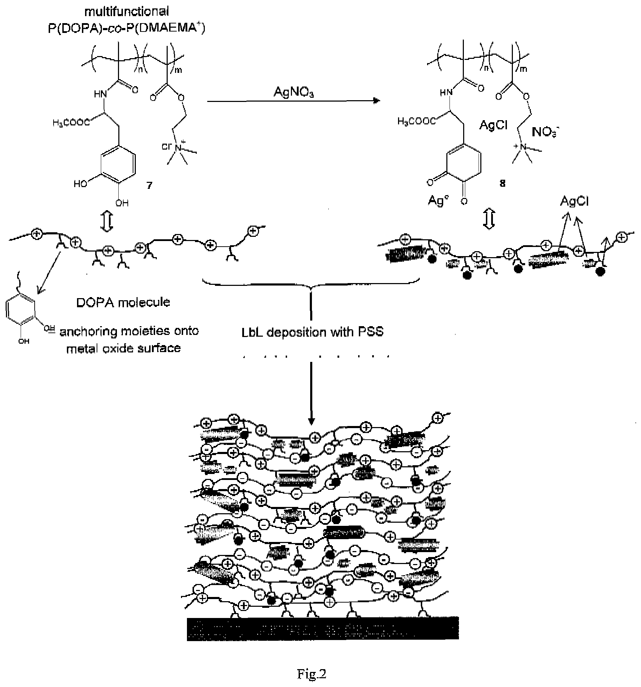

**Fig. 2** is a schematic representation of the formation of a multilayer composite film according to the invention carrying embedded silver and silver halogenide nanoparticles **(8).** The structure of the polyelectrolyte in Fig. 2 represents a schematic illustration of the polyelectrolyte copolymer.

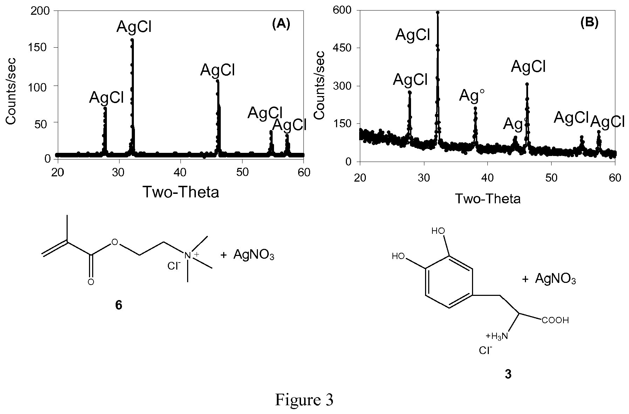

**Fig. 3** shows diffraction patterns of silver nanoparticles powders: (A) from a (DMAEMA⁺)/AgNO₃ blend with n DMAEMA⁺= n Ag⁺ = 1.7 × 10⁻³ mol; (B) from a DOPA methyl ester hydrochloride/AgNO₃ with esterified DOPA = n Ag⁺ = 1.4 × 10⁻³ mol.

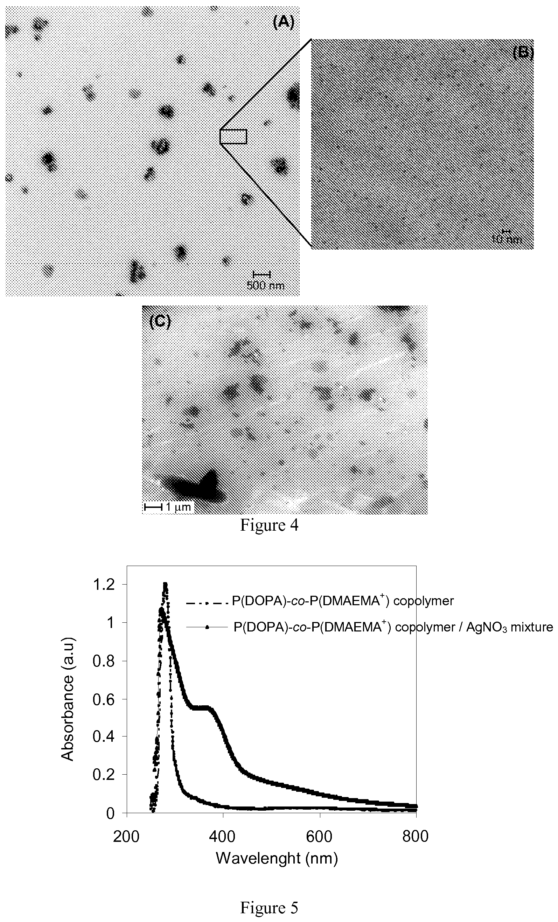

**Fig. 4** shows TEM images of the P(DOPA)-*co*-P(DMAEMA⁺) copolymer/AgNO₃ blend with n DOPA = n AgNO₃ = 2 × 10⁻⁶ mol (photos A and B) and of DOPA methyl ester hydrochloride/AgNO₃ with esterified DOPA = n Ag⁺ = 2 × 10⁻⁶ mol (photo C).
**Fig. 5** shows a comparison of UV-Vis spectra of P(DOPA)-*co*-P(DMAEMA⁺) copolymer at 0.41 g/L, with those of the nanohybrid resulting from the P(DOPA)-*co-*P(DMAEMA⁺) copolymer (0.41 g/L)/AgNO₃ blend with n DOPA = n AgNO₃ = 2 × 10⁻⁶ mol.

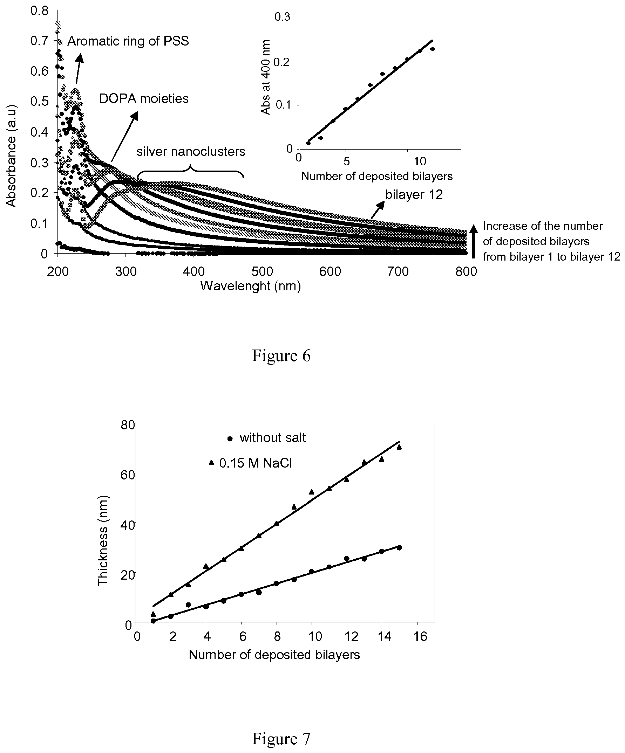

**Fig. 6** shows UV-Vis absorption spectra of layer-by-layer assemblies of P(DOPA)-*co-*P(DMAEMA⁺) (7 g/L) /[PSS (7 g/L) /P(DOPA)-*co*-P(DMAEMA⁺)-silver (7g/L with n Ag = 3 × 10⁻⁵ mol ]n (with n= 1-12) and evolution of the absorbance at λₘₐₓ = 400 nm versus the number of deposited [PSS (7 g/L) /P(DOPA)-co-P(DMAEMA⁺)-silver] bilayers.
**Fig. 7** shows the evolution of multilayer thickness as a function of the number of deposited P(DOPA)-*co*-P(DMAEMA⁺) (7 g/L) /PSS (7 g/L) bilayers without salt and in 0.15 M NaCl.

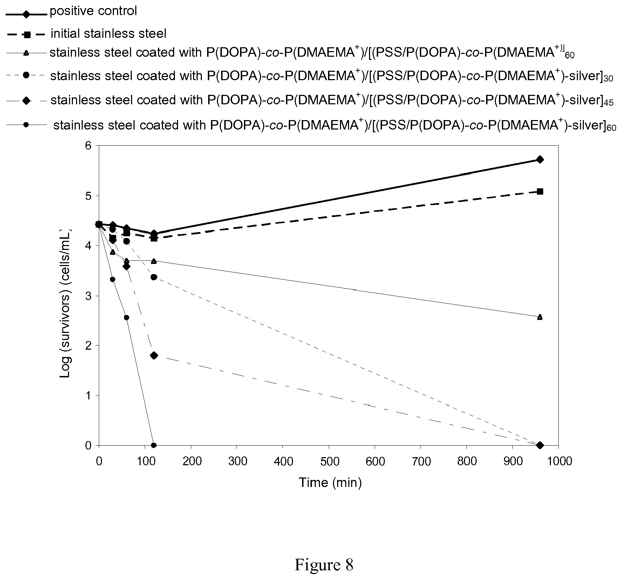

**Fig. 8** is a logarithmic plot of the viable cell number of E. Coli versus the exposure time, for an uncoated substrate, for stainless steel coated with P(DOPA)-*co-*P(DMAEMA⁺)/[PSS/P(DOPA)-*co*-P(DMAEMA⁺)], P(DOPA)-*co-*P(DMAEMA⁺)/[PSS /P(DOPA)-*co*-P(DMAEMA⁺)-silver]₃₀, P(DOPA)-*co-*P(DMAEMA⁺)/[PSS /P(DOPA)-*co*-P(DMAEMA⁺)-silver]₄₅ and with P(DOPA)-*co-*P(DMAEMA⁺)/[PSS /P(DOPA)-*co*-P(DMAEMA⁺)-silver]₆₀. The chain polymer concentrations are equal to 7 g/L and the silver amount in solution is of 5.6 × 10⁻⁵ mol.

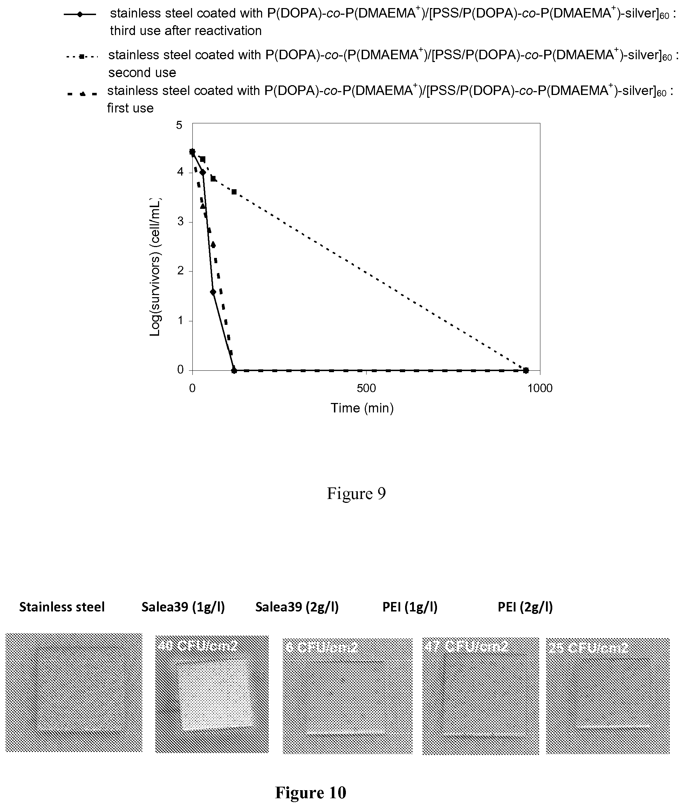

**Fig. 9** is a logarithmic plot of the viable cell number of E. Coli versus the exposure time, for a substrate coated with P(DOPA)-*co*-P(DMAEMA⁺)/[PSS /P(DOPA)-*co-*P(DMAEMA⁺)-silver]₆₀, with P(DOPA)-*co*-P(DMAEMA⁺)/[PSS /P(DOPA)-*co-*P(DMAEMA⁺)-silver]₆₀ film but preliminarily tested against E. Coli, and for SS substrate coated with the same P(DOPA)-*co*-P(DMAEMA⁺)/[PSS /P(DOPA)-*co-*P(DMAEMA⁺)-silver]₆₀ film, reactivated by dipping in a 0.1 M AgNO₃ solution.
**Fig. 10** is from left to right (Figure 10): ISO846 method C antimicrobial test on stainless steel without any coating, P(DOPA)-co-P(DMAEMA⁺) (1g/l)-(PAA-nisin)5, P(DOPA)-co-P(DMAEMA⁺) (2g/l)-(PAA-nisin)5, PEI(1g/l)-(PAA-nisin)5, PEI(2g/l)-(PAA-nisin)5. The number of colony forming units per square centimeter of stainless steel substrate (CFU/cm2) is indicated in order to quantify the ISO846 C test.

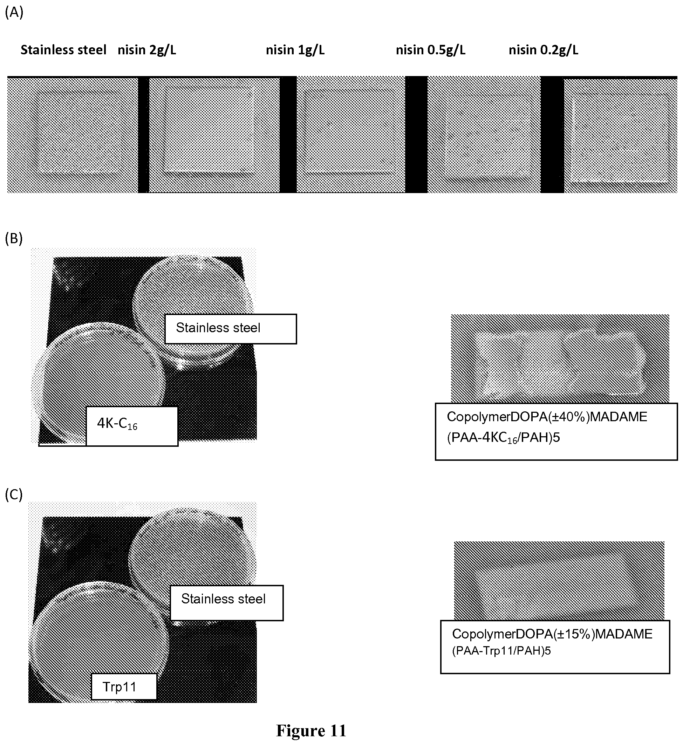

**Fig. 11** illustrates the antibacterial properties of different multilayer films: (A) Antimicrobial testing of the nisin peptide embedded in a (PAA-nisin)5 multilayer. Tests ISO846 C with *B. subtilis* strain on (P(DOPA)-co-P(DMAEMA⁺))-(PAA-nisin)5 multilayers. P(DOPA)-co-P(DMAEMA⁺) and PAA were used at 2g/l whereas the nisin concentration varied from 2 to 0,5 g/l. (B) Antimicrobial testing of the 4KC₁₆ peptide embedded in a (PAA-4KC₁₆/PAH)5 multilayer (Left) Test ISO22196 with E. *coli* strain on stainless steel substrate and on (P(DOPA)-co-P(DMAEMA⁺))-(PAA-4KC₁₆/PAH)5 multilayer. (Right) Test ISO846 method C with *B. subtilis* strain on DOPA-(PAA-4KC₁₆/PAH)5 multilayer. (C) Antimicrobial testing of Trp11 peptides embedded in a (PAA-Trp11/PAH)5 multilayer (Left) Test ISO22196 with *E. coli* strain on stainless steel substrate and on DOPA-(PAA-Trp11/PAH)5 multilayer. (Right) Test ISO846 C with *B. subtilis* strain on DOPA-(PAA-Trp11/PAH)5 multilayer.

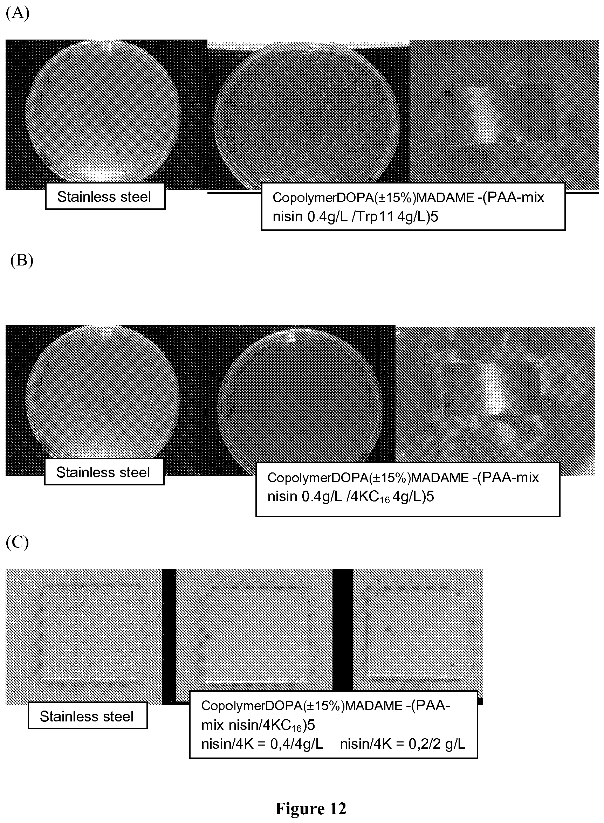

**Fig. 12** (A) Antimicrobial testing of the combination nisin/Trp11 embedded in a (P(DOPA)-co-P(DMAEMA⁺))-(PAA MW 1800-mix nisin 0.4g/L/Trp11 4g/L)5 multilayer on stainless steel. (Left) Test ISO22196 with *E. coli* strain on stainless steel (Centre) or (P(DOPA)-co-P(DMAEMA⁺))-(PAA-mix nisin 0.4g/L/Trp11 4g/L)5 (Right) Test ISO846 method C with *B. subtilis* strain on (P(DOPA)-co-P(DMAEMA⁺))-(PAA-mix nisin 0.4g/L/Trp11 4g/L)5. (B) Antimicrobial testing of of the combination nisin/4K embedded in a (P(DOPA)-co-P(DMAEMA⁺))-(PAA-mix nisin 0.4g/L/4KC₁₆ 4g/L)5 multilayer on stainless steel. (Left) Test ISO22196 with *E*. *coli* strain on stainless steel (Centre) or (P(DOPA)-co-P(DMAEMA⁺)) -(PAA-mix nisin 0.4g/L/4KC₁₆ 4g/L)5 (Right) Test ISO846 method C with *B. subtilis* strain on (P(DOPA)-co-P(DMAEMA⁺))-(PAA-mix nisin 0.4g/L/4KC₁₆ 4g/L)5. (C) Effect of nisin and 4KC₁₆ respective concentrations for the (P(DOPA)-co-P(DMAEMA⁺))-(PAA-mix nisin/4KC₁₆)5. Test ISO846 method C with *B. subtilis* strain on (Left) stainless steel (Middle) (P(DOPA)-co-P(DMAEMA⁺))-(PAA-mix nisin 0.4g/L/4KC₁₆ 4g/L)5 (Right) (P(DOPA)-co-P(DMAEMA⁺))-(PAA-mix nisin 0.2g/L/4KC₁₆ 2g/L)5

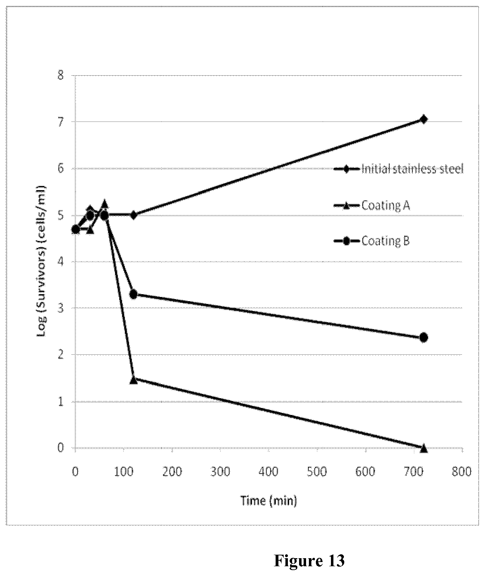

**Fig. 13** **:** plot of the log(number of survivors) against the exposure time when the same amount of *E. Coli* (10⁵ cells/mL of bacteria) was exposed to uncoated stainless steel (initial stainless steel), stainless steel coated with non-dialyzed polyelectrolyte material (Coating A) and stainless steel coated with dialyzed polyelectrolyte material (Coating B).

### Polyelectrolyte Copolymer

As a first aspect of the invention, the polyelectrolyte copolymer shall be discussed in detail in the following. The polyelectrolyte copolymer of the composite of the invention comprises at least two types of units, namely units (A) and (B1) or units (A) and (B2). The units (A), (B1) or (B2), respectively, may be the same throughout the copolymer. Alternatively, more than one type of each of the units (A), (B1) or (B2), such as two or three different types, may be independently present. In addition, the polyelectrolyte copolymer may comprise further types of units, such as units (C). Thus, the term "copolymer" as used in the present context not only embraces binary copolymers, but also ternary and higher copolymers. The term "unit" refers to units which form the backbone of the copolymer, and which are derived from monomers which are copolymerized to form the polyelectrolyte copolymer. Each type of unit is contained in the copolymer plural times, and may be repeated along the backbone of the copolymer in a regular order or in random order.

The **units (A)** comprise one or more dihydroxyphenyl groups, preferably as 3,4-dihydroxyphen-1-yl groups (also referred to as catechol groups herein). Other substituents than the two hydroxyl groups may be present on the phenyl ring of the dihydroxyphenyl groups, as long as they do not interfere substantially with the function of the units (A) in the context of the present invention. However, it is generally preferred that the units (A) comprise dihydroxyphenyl groups of the formula -C₆H₃(OH)₂, i.e. without further substituents.

Preferably, these dihydroxyphenyl groups are bound to the remaining atoms of the unit (A) via an alkylene group attached to the carbon atom in position 1 of the phenyl ring. Typically, the alkylene group is a C1 to C5 alkylene group, preferably a methylene or ethylene group. As will be understood by the skilled reader, Cn (e.g. C1 or C5 as referred to above) indicates herein that a number of n carbon atoms is/are present in the group under consideration.

The units (A) may comprise one or more than one dihydroxyphenyl group, such as two or three, per unit. However, it is preferred that one of these groups is present per unit (A). The dihydroxyphenyl groups are covalently bound within the unit (A) such that they are present within sidechains formed along the backbone of the polyelectrolyte copolymer.

Preferably, the monomers forming the units (A) in the polyelectrolyte copolymer are radically polymerizable monomers, and in particular monomers providing a radically polymerizable vinyl functionality in addition to the dihydroxyphenyl group(s).

Among them, preferred monomers can be mentioned which are represented by formula (1):

H₂C=C(R¹)-C(O) -Y-(CH₂)ₙ-C₆H₃(OH)₂ (1),

and in particular by formula (1a)

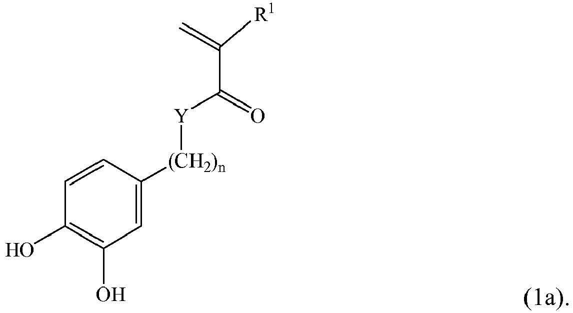

Both in formula (1) and (1a), R¹ is a hydrogen atom or an alkyl group which may be unsubstituted or substituted by one or more substituents such as -OH, halogen, an amino, nitro, ester, amide, aryl, alkoxy or an ether group. Y is a divalent linking group and n is an integer selected from 0 to 5.

R¹ is preferably hydrogen or an unsubstituted C1 to C4 alkyl group. Particularly preferred are hydrogen, a methyl or an ethyl group.

Y is preferably a divalent hydrocarbon group, generally an alkenyl group, which may be linear or branched and which may be interrupted by one or more heteroatoms such as nitrogen or oxygen and/or which may be terminated at either end by a heteroatom such as nitrogen or oxygen. The total number of carbon atoms of Y is preferably 1 to 6. The number of heteroatoms is preferably 0, 1 or 2, particularly 1. Y may be unsubstituted or substituted by one or more substituents such as -OH, a halogen atom, a carbonyl group, an ester, or an amide group.

Particularly preferred as Y is a linking group which forms, together with the carbonyl function to which it is attached, an amide bond (in which case a nitrogen atom is attached to the carbonyl carbon atom) or an ester bond (in which case an oxygen atom is attached to the carbonyl carbon atom). For example, Y can be a group -N(R^{a})-R^{b}- or -O-R^{b}-, wherein R^{a} is a monovalent group attached to the nitrogen atom, selected from a hydrogen atom or an alkyl group which may be unsubstituted or substituted by one or more substituents such as -OH, halogen, an amino, nitro, ester, amide, aryl, alkoxy or an ether group. Preferred is hydrogen or an unsubstituted alkyl group. Particularly preferred is hydrogen. R^{b} is a direct bond or an alkylene group which may be unsubstituted or substituted by one or more substituents such as -OH, halogen, an amino, nitro, ester, amide, aryl, alkoxy or an ether group. Preferably, R^{b} is unsubstituted. More preferably, R^{b} is a methylene or an ethylene group. A preferred optional substituent is the ester group, particularly a group -C(O)OCH₃.

Preferred values for n are 0, 1 or 2. If Y comprises a group R^{b} which is a direct bond, n is preferably 1 or 2. If Y comprises a group R^{b} which is an alkylene group, n is preferably 0.

Particularly preferred as monomers forming the units (A) are those of the following formula (2) 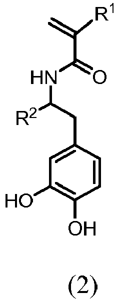 wherein R¹ is as defined for formula (1) and R² is hydrogen, alkyl, an ester or amide group.

Most preferred as monomers of formula (2) are those wherein R¹ is hydrogen or methyl, and R² is an ester group, such as a methyl or ethyl ester.

While the above formulae (1), (1a) and (2), embrace all stereoisomers of the respective molecules, acrylamide and methacrylamide of 3,4-dihydroxy-L-phenylalanine, in particular those having the carboxylic acid function of the amino acid protected as a methyl or ethyl ester group, can be conveniently used for this purpose. Acrylic or methacrylic acid esters of 3,4-dihydroxy-L-phenylalanine can also be conveniently used for this purpose.

Particular examples of compounds of formula (2) include methyl-2-methacrylamido-3-(3,4-dihydroxyphenyl)propanoate, methyl-2-acrylamido-3-(3,4-dihydroxyphenyl)propanoate, N-(3,4-dihydroxyphenethyl)methacrylamide or N-(3,4-dihydroxyphenethyl)acrylamide.

The **units (B1) and (B2)** comprise a cationic or anionic group, respectively. Generally, the ionic groups are covalently bound within the unit. In other words, a polyelectrolyte copolymer molecule in accordance with the invention comprises either cationic groups within its polymer structure or anionic groups, but should not comprise both at the same time. On the other hand, the invention embraces embodiments wherein copolymer structures containing cationic groups are used together and brought into contact with copolymer structures containing anionic groups, such as the multilayer films explained in more detail below.

The terms "anionic" or "cationic" groups are used herein in accordance with their common meaning in the art to refer to moieties bearing a negative or a positive ionic charge, respectively. The charge is counterbalanced by a counter-ion of the opposite charge which is not linked via any covalent bond to the anionic or cationic group contained in the units **(B1)** and (B2). The counter-ion may be a charged atom or molecule, but may also be provided by a polyelectrolyte which comprises a plurality of charged groups, or by a combination of these.

Moreover, the terms "anionic group"/"anionic substituent" or "cationic group"/"cationic substituent" embrace groups which are present in an ionic form under the conditions in which the polyelectrolyte copolymer of the invention is used, but which may be non-ionic under different conditions. In particular, this includes groups which are ionic within certain pH-ranges readily determined by the person skilled in the art, such as carboxylic acid groups, which are anionic in their deprotonated form, or amino groups, which may be protonated to form cationic groups. For example, in cases where the polyelectrolyte copolymer of the invention is used to coat a medical device inserted into the body, such as a prosthesis, units (B1) or (B2) can be chosen which contain ionic groups at physiological pH values, typically between 6 and 8.

Exemplary cationic groups which can be used in the units (B1) are ammonium groups, phosphonium groups or amino groups which may be ionized. More preferred groups are those represented by the following formulae (3), (4) and (5). Ammonium moieties, in particular those of formula (3), are especially preferred.

-N⁺(R⁸)(R⁹)(R¹⁰) (3)

-P⁺(R⁸)(R⁹)(R¹⁰) (4)

-N(R⁸)(R⁹) (5)

In these formulae R⁸, R⁹ and R¹⁰ are independently hydrogen, alkyl, or cycloalkyl and R¹⁰ may further be a phenyl or benzyl group. In formula (3) or (5), furthermore, the groups R⁸ and R⁹ may be taken together to form an aromatic or non-aromatic heterocyclic ring together with the nitrogen atom to which they are attached, such as pyridine, morpholine, piperidine, or pyrimidine. When R⁸, R⁹ and R¹⁰ are alkyl, cycloalkyl, phenyl or benzyl groups, these groups may be substituted by one or more substituents such as -OH, an ester, an amide, or an ether group. As cycloalkyl groups, C5 to C7 groups are preferred. As heterocyclic rings, those having 5 to 7 ring members are preferred.

Exemplary anionic counter ions which may be present in the polyelectrolyte copolymer of the composite of the invention singly or in combination, in particular as long as it is not combined with a polyelectrolyte of the opposite charge to form a bilayered or multilayered structure, are halogenides such as chloride, bromide, iodide, fluoride, borate, tetrafluoroborate, perchlorate, nitrate, sulfate, hydrogensulfate, tosylate, acetate, alkylsulfate, trifluoromethylsulfate, benzenesulfate or phosphates. Preferred are inorganic ions such as the halogenides (e.g. chloride, bromide or iodide), nitrate or sulfate.

Exemplary anionic groups which can be used in the units (B2) are carboxylate, sulfonate, phosphate and alkylsulfate groups or a free carboxylic acid group which may still be deprotonated.

Exemplary cationic counter ions which may be present in the polyelectrolyte copolymer according to the invention, singly or in combination, in particular as long as it is not combined with a polyelectrolyte of the opposite charge to form a bilayered or multilayered structure, are those of the alkaline metals, such as sodium or potassium, of the alkaline earth metals, such a calcium or magnesium, transition metal ions, such as Zn, Zr, Cu, Ag or ammonium ions.

Generally, the cationic or anionic group forms a side chain or is present within a side chain of the polyelectrolyte copolymer. Such a side chain may comprise one or more than one, such as two or three, cationic or anionic groups. Preferred is one of these groups per side chain. The cationic or anionic group may be covalently attached directly to the polymer backbone of the polyelectrolyte copolymer, e.g. in the case where a (meth)acrylic acid monomer is used to provide a unit (B2). It may also be covalently attached to the polymer backbone via a linker, e.g. a divalent hydrocarbon group, such as an alkenyl group, which may be linear or branched and which may be interrupted by one or more heteroatoms such as nitrogen or oxygen and/or which may be terminated by a heteroatom such as nitrogen or oxygen. The total number of carbon atoms in the linker is preferably 1 to 6. The number of heteroatoms is preferably 0, 1 or 2. The linker may be unsubstituted or substituted by one or more substituents such as -OH, a halogen atom, a carbonyl group, an ester, or an amide group.

Preferably, the monomers forming the units (B1) and (B2) in the polyelectrolyte copolymer are radically polymerizable monomers, and in particular monomers providing a radically polymerizable vinyl functionality.

Particularly preferred as monomers forming the units (B1) or (B2) are those of formula (6): 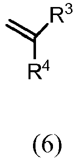 wherein R³ is selected from hydrogen or alkyl which may be unsubstituted or substituted by one or more substituents such as -OH, halogen, an amino, nitro, ester, amide, aryl, alkoxy or an ether group and R⁴ is either
(i) a cationic group, or an alkyl, aryl, ester or amide group substituted at least with a cationic group in the case of unit (B1); or
(ii) an anionic group, or an alkyl, aryl, ester or amide group substituted at least with an anionic group in the case of unit (B2).

Preferably, R³ is hydrogen or an unsubstituted alkyl, particularly preferred are hydrogen or methyl.

Preferred groups R⁴ for option (i) are
the cationic groups of formula (3) to (5);
an alkyl group which is substituted by a cationic group, such as the cationic groups (3) to (5), and which may optionally be further substituted by one or more substituents such as -OH, halogen, an amino, nitro, ester, amide, aryl, alkoxy or an ether group;
an aryl group which is substituted by a cationic group, such as the cationic groups (3) to (5), and which may optionally be further substituted by one or more substituents such as -OH, halogen, an amino, nitro, ester, amide, alkyl, alkoxy or an ether group;
a group -C(O)OR^{11a} or a group -C(O)NR^{12a}R^{13a},
wherein R^{11a} represents an alkyl group which is substituted by a cationic group , such as the cationic groups (3) to (5), and which may optionally be further substituted by one or more substituents such as -OH, halogen, an amino, nitro, ester, amide, aryl, alkoxy or an ether group; or an aryl group which is substituted by a cationic group , such as the cationic groups (3) to (5), and which may optionally be further substituted by one or more substituents such as -OH, halogen, an amino, nitro, ester, amide, alkyl, alkoxy or an ether group;
and R^{12a} represents an alkyl group which is substituted by a cationic group , such as the cationic groups (3) to (5), and which may optionally be further substituted by one or more substituents such as -OH, halogen, an amino, nitro, ester, amide, aryl, alkoxy or an ether group; or an aryl group which is substituted by a cationic group as defined above and which may optionally be further substituted by one or more substituents such as -OH, halogen, an amino, nitro, ester, amide, alkyl, alkoxy or an ether group; and R^{13a} represents an alkyl group which may optionally be substituted by one or more substituents such as -OH, halogen, an amino, nitro, ester, amide, aryl, alkoxy or an ether group; or an aryl group which may optionally be substituted by one or more substituents such as -OH, halogen, an amino, nitro, ester, amide, alkyl, alkoxy or an ether group or R^{13a} represents a group R^{12a};

In the context of the definition of R⁴ for option (i), alkyl or aryl groups are generally preferred which do not carry further substituents apart from the cationic group.

Particularly preferred as R⁴ for option (i) are an aryl group, such as a phenyl group, carrying a cationic substituent and an ester group -C(O)OR^{11a}, wherein R^{11a} is an alkyl group carrying a cationic substituent.

Preferred groups R⁴ for option (ii) are
a carboxylate (-COO⁻), sulfonate, phosphate or alkylsulfate group or
an alkyl group which is substituted by an anionic group as defined above and which may optionally be further substituted by one or more substituents such as -OH, halogen, an amino, nitro, ester, amide, aryl, alkoxy or an ether group;
an aryl group which is substituted by an anionic group as defined above and which may optionally be further substituted by one or more substituents such as -OH, halogen, an amino, nitro, ester, amide, alkyl, alkoxy or an ether group;
a group -C(O)OR^{11b} or a group -C(O)NR^{12b}R^{13b},
wherein R^{11b} represents an alkyl group which is substituted by an anionic group as defined above and which may optionally be further substituted by one or more substituents such as -OH, halogen, an amino, nitro, ester, amide, aryl, alkoxy or an ether group; or an aryl group which is substituted by an anionic group as defined above and which may optionally be further substituted by one or more substituents such as -OH, halogen, an amino, nitro, ester, amide, alkyl, alkoxy or an ether group;
and wherein R^{12b} represents an alkyl group which is substituted by an anionic group as defined above and which may optionally be further substituted by one or more substituents such as -OH, halogen, an amino, nitro, ester, amide, aryl, alkoxy or an ether group; or an aryl group which is substituted by an anionic group as defined above and which may optionally be further substituted by one or more substituents such as -OH, halogen, an amino, nitro, ester, amide, alkyl, alkoxy or an ether group; and R^{13b} represents an alkyl group which may optionally be substituted by one or more substituents such as -OH, halogen, an amino, nitro, ester, amide, aryl, alkoxy or an ether group; or an aryl group which may optionally be substituted by one or more substituents such as -OH, halogen, an amino, nitro, ester, amide, alkyl, alkoxy or an ether group or R^{13b} represents a group R^{12b}.

In the context of the definition of R⁴ for option (ii), alkyl or aryl groups are generally preferred which do not carry further substituents apart from the anionic group.

Particularly preferred as R⁴ for option (ii) are a carboxylic group; an aryl group, such as a phenyl group, carrying an anionic substituent; or an ester group -C(O)OR^{11b}, wherein R^{11b} is an alkyl group carrying an anionic substituent.

Specific examples of monomers of formula (6) forming a unit (B1) include 2-(methacryloxy)ethyl-trimethylammonium chloride, 2-dimethylaminoethylmethacrylate hydrochloride, 2-diethylaminoethylmethacrylate hydrochloride, 2-dimethylaminoethylacrylate hydrochloride, 2-diethylaminoethylacrylate hydrochloride, 2-aminoethyl methacrylate hydrochloride, 2-(*tert*-butylamino)ethyl methacrylate hydrochloride, 3-(dimethylamino)propyl acrylate hydrochloride, 2-vinylpyridine hydrochloride salt, 1-methyl-2-vinylpyridinium iodide (or bromide or chloride), 4-vinylpyridine hydrochloride salt, 1-methyl-4-vinylpyridinium iodide (or bromide or chloride), N,N,N-trimethyl(4-vinylphenyl)methanaminium iodide (or bromide or chloride) or N,N-dimethyl(4-vinylphenyl)methanamine hydrochloride.

Specifically preferred examples of the monomer forming the units (B1) are the 2-methacryloxyethyltrimethylammonium or the 2-acryloxyethyltrimethylammonium cation.

Examples of monomers of formula (6) forming a unit (B2) include styrene sulfonate (e.g. as sodium or potassium salt), acrylic acid (e.g. as sodium, potassium, zinc or zirconium salt), methacrylic acid (e.g. as sodium, potassium, zinc or zirconium salt), 3-sulfopropyl methacrylate (e.g. potassium salt), 3-sulfopropyl acrylate (e.g. potassium salt), 4-vinylbenzoic acid (e.g. sodium or potassium salt), 2-acrylamido-2-methylpropane-1-sulfonate (e.g. potassium or sodium salt), 3-acrylamido-3-methylbutanoate (e.g. potassium or sodium salt).

Preferably, the monomer forming the units (B2) is acrylic acid, methacrylic acid (e.g. as sodium or potassium salt) or styrene sulfonate.

A particularly preferred polyelectrolyte copolymer of the composite of the invention is
a copolymer of methyl 3-(3,4-dihydroxyphenyl)-2-methacrylamidopropanoate and the 2-methacryloxyethyltrimethylammonium cation (with a counter ion as referred to above, such as chloride) which is also referred to herein as P(DOPA)-*co-*P(DMAEMA⁺). Another particularly preferred polyelectrolyte copolymer of the composite of the invention is a copolymer of methacrylic acid (e.g. as sodium or potassium salt) and methyl 3-(3,4-dihydroxyphenyl)-2-methacrylamidopropanoate which is also referred to herein as P(DOPA)-*co*-P(MAA).

The polyelectrolyte copolymer according to the composite of the invention may comprise one type or
more types of **units (C)** in addition to units (A) and (B1) or (A) and (B2). Units (C) are units having a structure other than that of units (A) and (B1) or (A) and (B2), derived from any type of monomer which is copolymerizable in the polyelectrolyte copolymer of the present invention. Typically, units (C) are derived from monomers having a radically polymerizable C-C double bond.

For example, one or more monomers of formula (7) may be copolymerized to form units (C) in the polyelectrolyte copolymer : 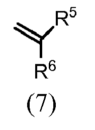 wherein R⁵ is selected from hydrogen or alkyl which may be unsubstituted or substituted by one or more substituents such as -OH, halogen, an amino, nitro, ester, amide, aryl, alkoxy or an ether group, and R⁶ is selected from an ester group; an amide group; an amino group; an aryl group which may be substituted by a polar group, such as a hydroxyl, ester, ether, epoxide, amide, carbonyl group or nitrile group; an alkyl group which may be substituted by a polar group, such as a hydroxyl, carbonyl, ester, ether, nitrile, epoxide, amide or carbonyl group or by a glycoside; or a heterocyclic group which may be substituted by a polar group, such as hydroxyl, carbonyl, ester, nitrile, epoxide, ether or amide group.

R⁵ preferably represents hydrogen or unsubstituted alkyl, and a particular preference is given to hydrogen or methyl.

The presence of a polar group as substituent in R⁶ is useful in cases where the copolymerization of the respective monomer is to be carried out in water in homogeneous conditions, in which case the introduction of polar groups facilitates the dissolution of the monomers in water.

Moreover, in cases where the polyelectrolyte copolymer of the composite of the invention is
used as an anchoring layer for other coatings (such as an organic, typically a polymer, coating having a structure different from the polyelectrolyte copolymer according to the invention), the monomer providing unit (C), e.g. the monomer of formula (7), should preferably be selected such that it may react with a chemical group of the organic coating. For example, comonomers of formula (7) containing polar groups, such as hydroxyl groups or (primary or secondary) amino groups are useful in this respect. For instance, when a polyurethane coating is to be deposited on a given substrate using the polyelectrolyte of the invention as an anchor layer, the polyelectrolyte should contain chemical groups which are able to react with isocyanate groups. A stable polyurethane coating can then be formed (e.g. via in situ polycondensation) on the polyelectrolyte anchor layer. Comonomers of formula (7) containing polar groups, such as epoxide groups are also useful in this respect.

R⁶ preferably represents an amide group, particularly -C(O)NH₂ or -C(O)N(CH₃)₂; an ester group, particularly esters formed with alkyleneglycol, poly- or oligoalkylene glycol groups; or a N-heterocyclic group which may be aromatic or non-aromatic. The N-heterocyclic group may contain (a) further heteroatom(s) in addition to the nitrogen, such as a further nitrogen atom or an oxygen atom. It typically contains 3 to 7 Carbon atoms in addition to the heteroatom(s), and may be substituted by a polar group, specifically by a carbonyl group. Preferably, the N-heterocyclic group is connected to the remainder of the molecule at an N-atom. Examples of the N-heterocyclic group as R⁶ are pyrrolidone, caprolactame or imidazole.

Examples of compounds of formula (7) include 2-hydroxyethylacrylate, 2-hydroxyethylmethacrylate, acrylamide, methacrylamide, dimethylacrylamide, N-isopropylacrylamide, N-vinylpyrrolidone, N-vinylcaprolactame, N-vinyl imidazole, N-(2-hydroxypropyl)methacrylamide, N-acryloyl pyrrolidine, ethylene glycol methyl (or phenyl) ether methacrylate, ethylene glycol methyl (or phenyl) ether acrylate, di(ethylene glycol) methyl (or phenyl) ether methacrylate, di(ethylene glycol) methyl (or ethyl) ether acrylate, poly(ethylene glycol) methyl (or phenyl) ether acrylate, poly(ethylene glycol) methyl (or phenyl) ether methacrylate, glycomonomers (e.g. 2-methacryloxyethyl glucoside), acrylonitrile, , methacrylonitrile, glycidyl acrylate or methacrylate.

In the context of the invention, the term "alkyl" or "alkyl group", unless separately defined, refers to a branched or linear, saturated hydrocarbon group of preferably 1 to 10, more preferably 1 to 4 carbon atoms, such as methyl, ethyl, propyl, isopropyl, butyl, t-butyl, isobutyl, pentyl, hexyl, isohexyl, heptyl, 4,4-dimethylpentyl, octyl, 2,2,4-trimethyl-pentyl, nonyl, decyl and the various branched chain isomers thereof. The same applies if the term is used in combinations with other groups, e.g. "alkoxy" or "alkylsulfonate".

The term "alkylene" or "alkylene group" refers to a divalent group obtained by abstraction of a further hydrogen atom from an alkyl group as referred to above.

The terms "ester" or "ester group" preferably denote a group of the formula-C(O)OR¹¹, wherein R¹¹ is alkyl which is optionally substituted or aryl which is optionally substituted. Suitable substituents for alkyl include -OH, -NH₂, mono- or dimethylamino, mono- or diethylamino, phenyl, halide, epoxide or an ether group; suitable substituents for aryl include -OH, -NH₂, methyl, ethyl, propyl, butyl, halide, epoxide or an ether group.

The terms "amide" or "amide group" preferably denote a group of the formula -C(O)NR¹²R¹³, wherein R¹² and R¹³ are independently hydrogen, alkyl (preferably methyl, ethyl or propyl) which is optionally substituted or aryl (preferably phenyl) which is optionally substituted. Alternatively, R¹² and R¹³ form an aromatic or non-aromatic heterocyclic ring together with the nitrogen atom to which they are attached. The ring has preferably 5 to 7 members. Suitable substituents for alkyl include -OH,-NH₂, mono- or dimethylamino, mono- or diethylamino, phenyl, halide, epoxide or an ether group, suitable substituents for aryl include -OH, methyl, ethyl, propyl, butyl, halide, epoxide or an ether group.

The term "amino" or "amino group" embraces primary and secondary amino groups. It preferably denotes a group of the formula -NR¹⁴R¹⁵, wherein R¹⁴ and R¹⁵ are independently hydrogen, alkyl (preferably methyl, ethyl or propyl) which is optionally substituted or aryl (preferably phenyl) which is optionally substituted. Alternatively, R¹⁴ and R¹⁵ can form an aromatic or non-aromatic heterocyclic ring together with the nitrogen atom to which they are attached. The ring has preferably 5 to 7 members. Suitable substituents for alkyl include -OH, -NH₂, mono- or dimethylamino, mono- or diethylamino phenyl, halide, epoxide or an ether group, suitable substituents for aryl include -OH, methyl, ethyl, propyl, butyl, halide, epoxide or an ether group.

The term "aryl" or "aryl group" refers preferably to monocyclic or bicyclic aromatic groups containing 6 to 10 carbon atoms in the ring portion, such as phenyl and naphtyl. Phenyl is preferred. The same applies if the term is used in combinations with other groups, e.g. aryloxy.

The term "ether" or "ether group" in the context of the invention may refer to single ether groups, or to polyether groups. It refers preferably to a group -alkylene-(O-alkylene)ₚ-R^{c}, wherein the alkylene groups are independently chosen from those defined above, p is an integer which preferably ranges from 0 to 5, preferably 0, 1 or 2, and R^{c} is hydrogen or hydroxyl (if p ≥ 1); alkoxy or aryloxy.

The term "glycoside" refers to glucose derivatives

The molar ratio of units (A) to the sum of units other than the units (A) (e.g. (B1) and (C) or (B2) and (C)) in the polyelectrolyte copolymer according to the invention is preferably between 0.001 and 0.5, and more preferably between 0.01 and 0.5. Particularly preferred are ratios between 0.02 and 0.4, and even more between 0.05 and 0.3.

The molar ratio of units (B1) or (B2) to the sum of units other than the units (B1) or (B2) (e.g. (A) and (C)) in the polyelectrolyte copolymer according to the invention is preferably between 100 and 0.01, and more preferably between 10 and 0.5. Particularly preferred are ratios between 10 and 1.

The molar ratio of units (C), such as units derived from monomers of formula (7), to the sum of units other than (C) (e.g. (A) and (B1) or (A) and (B2) may vary widely, depending on the application intended for the polyelectrolyte copolymer according to the invention. Typical values range from 0 to 100, preferred are molar ratios of 0.05 to 10. Particularly preferred is 0.08 to 1.

When only monomers of formula (1) (or (1a) or (2), respectively) and (6) are copolymerized to provide the polyelectrolyte copolymer according to the invention, the molar ratio of monomers (1)/(6), (1a)/(6) or (2)/(6) is preferably between 0.001 and 0.5, and more preferably between 0.01 and 0.5. Particularly preferred are ratios between 0.02 and 0.4, and even more between 0.05 and 0.3. When monomers of formula (1) (or (1a) or (2), respectively), (6) and (7) are used, the molar ratio (1)/[(6)+(7)], (1a)/[(6)+(7)] or (2)/[(6)+(7)] is preferably between 0.001 and 0.5, and more preferably between 0.01 and 0.5. Particularly preferred are ratios between 0.02 and 0.4, and even more between 0.05 and 0.3.

The polyelectrolyte copolymer of the composite of the invention may be a random copolymer
or an ordered copolymer, such as an alternate or a block or graft copolymer. In view of their unproblematic production, random copolymers or intermediate structures, wherein two or more polymer chains containing units in a random order are grafted to each other, are most frequently used.

The polyelectrolyte copolymer of the composite of the invention may have a linear chain
structure. In the context of the present invention, where the units (A), (B1) and (B2) and (C) typically comprise side chains of a certain length, the term "linear structure" or "linear chain structure" is used to refer to copolymers wherein the units forming the backbone of the copolymer are arranged in a linear fashion, without taking into account side chains which are linked to only one single unit of the backbone of the copolymer.

Preferably, however, the polyelectrolyte copolymer of the composite of the invention comprises a copolymer wherein two or more chains of a polyelectrolyte copolymer are linked by interchain bonds. Particularly preferred as a polyelectrolyte copolymer of the composite of the invention is a polyelectrolyte comprising branched or hyperbranched polyelectrolyte molecules, wherein at least two polyelectrolyte polymer chains are linked to each other by a covalent bond formed via a dihydroxyphenyl group contained within unit (A) .
The term "branched polyelectrolyte" denotes a polyelectrolyte copolymer wherein one or more polyelectrolyte polymer chain(s) containing units (A) and (B1) or (A) and (B2), and optionally units (C), are grafted on a first polyelectrolyte polymer chain also containing units (A) and (B1) or (A) and (B2), and optionally units (C). Typically, one or more additional chains are each chemically grafted via one or more covalent bond(s) to the first chain. It is particularly preferred that the covalent bond(s) between the polyelectrolyte chains in the branched polyelectrolyte is/are formed via a dihydroxyphenyl group contained within unit (A).
The term "hyperbranched polyelectrolyte" denotes a polyelectrolyte copolymer, wherein the polyelectrolyte polymer chain(s) containing units (A) and (B1) or (A) and (B2), and optionally units (C), which are grafted on a first polyelectrolyte polymer chain as described for the branched polyelectrolyte, are also branched, i.e. carry one or more further polyelectrolyte copolymer chain(s) each grafted to them via one or more covalent bond(s). Also in this case, it is particularly preferred that the covalent bond(s) between the polyelectrolyte chains in the branched polyelectrolyte is/are formed via a dihydroxyphenyl group contained within unit (A). This branching may continue in the hyperbranched polyelectrolyte through several levels of grafted copolymer chains. In this case, a plurality of polyelectrolyte chains will be linked to each other.

It has been found out that, the grafting of one chain to the other in a branched or hyperbranched structure can be conveniently accomplished via a dihydroxyphenyl group contained within unit (A) or within the monomer of formula (1), 1a) or (2), respectively. For example, two of these dihydroxyphenyl groups contained in different polymer chains may react with each other to form an ether bond linking one chain to the other. Alternatively or concurrently, a dihydroxyphenyl group of one chain may also react with a radical existing in another chain during radical polymerization, thus forming an interchain C-O bond or an interchain C-C bond. In a branched or hyperbranched polyelectrolyte, one or more bonds may exist between any two polymer chains. To ensure a good processability of the polyelectrolyte copolymer of the composite of the invention, such as the possibility to dissolve the polymer in a solvent for its application to a substrate, the number of bonds between any two polymer chains should be limited before the polyelectrolyte copolymer is applied to a surface. This can be achieved, e.g., by limiting the number of units (A) in the polyelectrolyte copolymer in accordance with the above teachings. Since the number of interchain bonds formed between any two chains in the branched or hyperbranched polyelectrolyte copolymer is thus generally not exceedingly high, and may be as low as one interchain bond between two chains, the chains in the branched or hyperbranched polyelectrolyte copolymer are considered herein as being grafted to each other, rather than crosslinked.

However, as will be described below, there is the possibility of further crosslinking the polyelectrolyte copolymer of the composite of the invention e.g. after its deposition on a
given substrate, if a radical initiator is co-deposited with the polyelectrolyte when a film of the polyelectrolyte is formed on the substrate. By subsequently activating the radical initiator and allowing a crosslinking reaction to take place, e.g. via a reaction of dihydroxyphenyl groups as described above, the durability of the film can be increased.

Especially when using a solution of the polyelectrolyte copolymer according to the invention for applying a polymer layer on a substrate, branched and hyperbranched polyelectrolytes are advantageous. Due to the steric hindrance between the linked copolymer chains in the branched or hyperbranched polyelectrolyte, the thickness of a polyelectrolyte layer may thus for instance be higher. Viscosity of the solution of branched polyelectrolyte is also different compared to a linear polyelectrolyte.

The molecular weight of the polyelectrolyte copolymer ranges from 1000 g/mol to several millions g/mol. Generally, branched and hyperbranched copolymers according to the invention have a high molecular weight, generally between 10000 g/mol and 10⁷ g/mol, preferably between 20000 g/mol and 6 x 10⁶ g/mol, and most preferably between 30000 g/mol and 5 x 10⁶ g/mol.

One method for obtaining the polyelectrolyte copolymer of the composite of the invention is to
dissolve monomers providing the units (A) and (B1) or (B2) and optionally (C), such as monomers of the formulae (1), (1a) or (2), (6) and optionally (7), in an suitable solvent and to react them in a polymerization reaction which is preferably started by a free radical initiator which is also present in the solvent. A preferred solvent for this polymerization reaction is an aqueous solvent, i.e. a solvent comprising water. Particularly preferred are solvents comprising 50 % by volume or more of water, and particularly preferred as a solvent is water. The monomers may be simultaneously reacted in a one-pot-reaction. Advantageously, protection of the dihydroxyphenyl moieties before polymerization is not needed and the aqueous solution of the copolymer resulting from the polymerization can be used directly after synthesis without any purification and/or deprotection step.

The polymerization reaction is generally carried out at a temperature ranging from 0°C to 100°C, preferably between 0°C and 80°C and more preferably between 20°C and 70°C.

Suitable free radical initiators are any agents producing free radicals, for example precursors such as azo compounds, peroxides or peroxy esters, which generate radicals by thermolysis. It is also possible to generate radicals by redox systems, photochemical systems or by high energy radiation such as beam or X- or γ- radiation.

Water soluble (or partially water soluble) free radical initiators are preferred. Examples of suitable free radical initiators generating free radicals by thermolysis are 4,4'-azobis(4-cyanopentanoic acid), 2,2'-azobis[2-methyl-N-(1,1-bis-(hydroxymethyl)-2-hydroxyethylpropionamide], 2,2'-azobis(2-methylpropionamidine) dihydrochloride, 2,2'-azobis[2-methyl-N-(2-hydroxyethyl) propionamide], 2,2'-azobis(isobutyramidine hydrochloride), 2,2'-azobis[2-methyl-N-(1,1-bis(hydroxymethyl)-2-ethyl)-propionamide], 2,2'-azobis[2-(2-imidazolin-2-yl)propane]dihydrochloride, 2,2'-Azobis[N-(2-carboxyethyl)-2-methylpropionamidine]hydrate, 2,2'-Azobis {2-[1-(2-hydroxyethyl)-2-imidazolin-2-yl]propane} dihydrochloride, 2,2'-Azobis(1-imino-1-pyrrolidino-2-ethylpropane)dihydrochloride, 2,2'-Azobis{2-methyl-N-[1,1-bis(hydroxymethyl)-2-hydroxyethyl]propionamide}, 2,2'-azobis[2-methyl-N-(2-hydroxyethylpropionamide], 2,2'-azobis(isobutylamide) dihydrate, azoinitiators having polyethylene glycol unit (products commercialized by Wako Chemicals GmbH, Germany, under the Trademark VPE 0201, VPE 0401 et VPE 0601). Potassium peroxydisulfate, ammonium peroxydisulfate, di-tert-butyl hyponitrite and dicumyl hyponitrite can be used, but oxidation of the dihydroxyphenyl moieties into their quinone form may be observed. The extent of oxidation will depend on the initiator/ dihydroxyphenyl group molar ratio.

Initiators generating radicals by photolysis are, for example benzoin derivatives, benzophenone, acyl phosphine oxides and photoredox systems.

Initiators generating radicals as a result of a redox reaction are in general a combination of an oxidant and a reducing agent. Suitable oxidants are, for example, potassium peroxydisulfate, ammonium peroxy disulfate, hydrogen peroxide, tert-butyl hydroperoxide. Suitable reducing agents are, for example, Fe(II) salts, Ti(III) salts, potassium thiosulfate, potassium bisulfite, ascorbic acid and salts thereof, oxalic acid and salts thereof, dextrose and Rongalite® (sodium formaldehyde sulfoxylate, BASF AG, Ludwigshafen, Germany). The reducing agent should be carefully chosen in order to limit oxidation of the dihydroxyphenyl moieties by the oxidant.

Preferred radical initiators are water soluble compounds which generate free radicals by thermolysis. 4'-azobis(4-cyanopentanoic acid), 2,2'-azobis(2-methylpropionamidine) dihydrochloride, and 2,2'-azobis[2-methyl-N-(1,1-bis-(hydroxymethyl)-2-hydroxyethylpropionamide] are particularly preferred. Potassium peroxydisulfate, ammonium peroxydisulfate and hydrogen peroxide can also be used as thermal initiator provided that the molar ratio dihydroxyphenyl to initiator is high, such as >2, preferably > 3 and most preferably 10.

The final concentration of the copolymer in water is generally between 0.1 and 60wt%, preferably between 0.5 wt% and 30 wt%, and more preferably between 1wt% and 25 wt%. Inorganic salts and buffers can be added in the polymerization medium in order to adjust the ionic strength and pH of the solution.

In the polyelectrolyte copolymer of the composite of the invention a part of or all of the
dihydroxyphenyl groups in the polyelectrolyte copolymer is oxidized to their
quinone form. The oxidation of the dihydroxyphenyl groups can be carried out according to oxidation procedures known in the art., including the in-situ reaction of the dihydroxyphenyl groups with oxidizing metal ions on a surface functionalized with the polyelectrolyte copolymer, as will be described below in more detail. The ratio of dihydroxyphenyl groups in oxidized form to the dihydroxyphenyl groups groups in non-oxidized form may vary widely, depending on the use which is made of the groups in oxidized form. Thus, the percentage of the dihydroxyphenyl phenyl groups of the polyelectrolyte copolymer of the composite of the invention which are present
in their oxidized form (based on the total number of dihydroxyphenyl groups in the polyelectrolyte copolymer in oxidized or non-oxidized form, but excluding dihydroxyphenyl groups which may have reacted to form a covalent bond between polyelectrolyte chains in a branched or hyperbrached polymer electrolyte) may be higher than 1 %, particularly higher than 10 % or higher than 30 %.

### Polyelectrolyte Composite Material

The present invention provides, in a second aspect, a polyelectrolyte composite material comprising (i) an oxidized form of the polyelectrolyte copolymer of the composite of the invention wherein a part of or all of the dihydroxyphenyl groups in the polyelectrolyte copolymer have been oxidized to their quinone form; and
(ii) particles of a metal and/or particles of a metal salt
Generally, the metal particles and/or the particles of a metal salt are embedded within a matrix formed by the oxidized form of the polyelectrolyte copolymer according to the invention. It should be understood that any reference to an "oxidized form of dihydroxyphenyl group" herein means the quinone form of the dihydroxyphenyl group, in particular a 3,4-benzoquinon-1-yl group.

Generally, the percentage of the dihydroxyphenyl groups of the polyelectrolyte copolymer of the composite of the invention which are present in their oxidized form (based
on the total number of dihydroxyphenyl groups in the polyelectrolyte copolymer in oxidized or non-oxidized form, but excluding dihydroxyphenyl groups which may have reacted to form a covalent bond between polyelectrolyte chains in a branched or hyperbrached polymer electrolyte) is higher than 1 %, preferably higher than 10 % and particularly higher than 30 %. Depending on the use which is made of the polyelectrolyte composite material, the percentage may rise up to 100 %. However, it is to be noted that a polyelectrolyte composite material wherein 100 % or close to 100 % of all dihydroxyphenyl groups are oxidized will be less suitable to adhere to a surface as such. Such a polyelectrolyte composite material will be suitable as an inner layer of a multilayer polymer material according to the invention which is discussed below. On the other hand, the amount of dihydroxyphenyl groups in their non-oxidized form which is necessary to allow the polyelectrolyte copolymer to adhere to the surface is not high. Thus, polyelectrolyte composite materials which contain a molar ratio of the units (A) with non-oxidized dihydroxyphenyl groups to the sum of units other than these units (A) of more than 0.001, particularly more than 0.05 will still provide excellent adhesion to a surface by means of the dihydroxyphenyl groups contained therein. Such a composite material may be directly applied to surfaces as a coating material.

Preferably, the polyelectrolyte composite material of the composite of the invention contains
the metal and/or the metal salt in the form of nanoparticles. The term "nanoparticles" as used herein, refers to particles of a size of 1 to 1000 nm. However, it is generally preferred that the size of the metal particles is in the range of 1 to 100 nm, whereas the size of the particles of the metal salt is preferably in the size range from 2 to 1000 nm. Depending on the desired application, the amount of metal particles and/or metal salt particles contained in the polyelectrolyte composite material according to the invention may vary over wide ranges. Generally, the molar ratio of metal (including both the elemental form and the metal cations of the salt) to the dihydroxyphenyl groups (including those in their non-oxidized or their oxidized form) contained in the polyelectrolyte composite material is higher than 0.01, preferably higher than 0.1. Ratios below 2 are generally used, and particularly ratios at or below 1 can be conveniently incorporated into the composite material.

A variety of metals can be used to provide the metal particles or metal salt particles. Preferred are metals which form can form cations in aqueous solution susceptible to reduction by the dihydroxyphenyl groups of the polyelectrolyte copolymer according to the invention, such as silver cation. Particularly preferred is silver due to its antibacterial properties. A single metal or combinations of different metals can be used. The counter-ion of the metal cation in any metal salt particles contained in the composite material should be selected such that the metal salt particles will not readily dissolve under the conditions under which the composite material is prepared and/or applied to a surface. Typically, this means that the metal salt particles have a low or substantially no solubility in water. The Kₚₛ solubility product constant of the metal salt in water at 25°C is preferably in the 10⁻² to 10⁻⁴⁰ range, more preferably in the 10⁻³ to 10⁻³⁰ range, and even more preferably in the in the 10⁻⁵ to 10⁻²⁰ range. For example, if silver cations are used to form metal salt particles, suitable anions include halides, such as bromide and chloride.

The polyelectrolyte composite material of the composite of the invention may contain only
metal particles or only particles of a metal salt. Preferably, it contains both. Particularly preferred are polyelectrolyte composite materials containing particles of elementary silver and particles of a silver halide, such as silver chloride or silver bromide.

Such composite materials can be advantageously applied to surfaces to provide them with antibacterial/antimicrobial properties. The polyelectrolyte copolymer according to the invention is an effective matrix for the in situ formation and stabilisation of metal particles and/or metal salt nanoparticles. The quinone functions, formed after reduction of metal cations by dihydroxyphenyl groups, may chelate metal nanoparticles, such as silver nanoparticles, through coordination interactions, and consequently, stabilize the nanoparticles.

A particularly preferred polyelectrolyte composite material of the composite of the invention comprises the P(DOPA)-*co*-P(DMAEMA⁺) polyelectrolyte as defined above in a form wherein all or part of the dihydroxyphenyl groups are oxidized to their quinone form, together with silver nanoparticles and silver chloride nanoparticles embedded in the polyelectrolyte matrix.

The antibacterial activity of the composite material of the present invention containing silver and silver salt particles can be attributed to the active biocidal species Ag⁺, coming from embedded silver salt, e.g. AgCl, and Ag° nanoparticles in the polyelectrolyte, which are diffusing out of the film. The biocidal mechanism is mainly due to the leached Ag⁺ ion. The AgCl and Ag° nanoparticles act as effective reservoirs for the release of biocidal Ag⁺ ions. AgCl nanoparticles provide a source of silver ions. The Ag⁺ ions can be produced via an oxidation step at the Ag° silver nanoparticles surface.

The polyelectrolyte composite material of the invention containing metal particles may be conveniently prepared by contacting
(i) a polyelectrolyte copolymer according to the invention with
(ii) a solution of a metal salt
to *cause in situ* reduction of the metal ions of the metal salt by dihydroxyphenyl groups in the polyelectrolyte copolymer to form metal particles. As set out above, the metal salt used in this process variant is preferably one which contains metal cations susceptible to reduction by the dihydroxyphenyl groups of the polyelectrolyte copolymer according to the invention. Thus, no seperate reducing agent is needed to prepare the metal particles in the polyelectrolyte composite material.

The polyelectrolyte composite material of the invention containing particles of a metal salt may be conveniently prepared by contacting
(i) a polyelectrolyte copolymer according to the invention containing units (B1) with
(ii) a solution of a metal salt
to *cause in situ* precipitation of a metal salt by an ion exchange with the counter ions of the cationic moiety of the units (B1). As set out above, this process variant is feasible if a metal is chosen for the metal salt solution which forms a salt with the counter ion of the polyelectrolyte copolymer according to the invention which has a sufficiently low solubility or is essentially non-soluble in the medium wherein (i) and (ii) are contacted. The term "low solubility" means in this respect a solubility which is sufficiently low such that the solubility product of the salt consisting of the cation of the metal salt and the counter ion (anion) of the unit (B1) is exceeded when (i) and (ii) are contacted.

In a particularly preferred embodiment of the process for the production of a polyelectrolyte composite material according to the invention, the two process variants including the in situ reduction and the in situ precipitation proceed concurrently when (i) a polyelectrolyte copolymer according to the invention containing units (B1) is contacted with (ii) a solution of a metal salt. This may be the case, e.g., if the cationic units (B1) in the polyelectrolyte copolymer (i) before the addition of the solution of a metal salt have a halogenide ion, such as a chloride or bromide ion, as a counter ion and wherein the solution of a metal salt (ii) added to the polyelectrolyte copolymer is a solution containing silver cations such that particles of metallic silver and/or particles of a silver halogenide are formed in a matrix of the polyelectrolyte.

Preferred solutions of metal salts (ii) are aqueous solutions of silver salts, such as AgNO₃, The molar ratio of the dihydroxyphenyl groups to Ag⁺, such as AgNO₃ is generally between 100/0.01, preferably between 10/0.1 and more preferably between 5/0.5 Conveniently, both can be contacted at room temperature, e.g. under stirring.

Advantageously, in the process according to the invention, the polyelectrolyte copolymer (i) and the solution of a metal salt (ii) are contacted as solutions in an aqueous medium. Subsequently, the solution may be coated onto a surface and dried. Alternatively, it is possible to coat the surface of a device with a polyelectrolyte copolymer according to the invention, and contact the coated surface with the solution of a metal salt (ii) in order to provide a polyelectrolyte composite material according to the invention.

According to a third aspect, the invention provides a polyelectrolyte composite material comprising (i) an oxidized form of the polyelectrolyte copolymer according to the invention, wherein a part of or all of the dihydroxyphenyl groups in the polyelectrolyte copolymer have been oxidized to their quinone form; and (ii) biomolecules grafted to the polyelectrolyte copolymer via reaction of an oxidized dihydroxyphenyl group with an amino or thiol group present in the biomolecule.

Also in this embodiment, the percentage of the dihydroxyphenyl groups of the polyelectrolyte copolymer of the composite of the invention which are present in their
oxidized form (based on the total number of dihydroxyphenyl groups in the polyelectrolyte copolymer in oxidized or non-oxidized form) is higher than 1 %, preferably higher than 10 % and particularly higher than 30 %. Depending on the use which is made of the polyelectrolyte composite material, the percentage may rise up to 100 %. However, it is to be noted that a polyelectrolyte composite material wherein 100 % or close to 100 % of all dihydroxyphenyl groups are oxidized will be less suitable to adhere to a surface as such. Such a polyelectrolyte composite material will be suitable as an inner layer of a multilayer polymer material according to the invention which is discussed below. On the other hand, polyelectrolyte composite materials which contain a molar ratio of the units (A) with such non-oxidized dihydroxyphenyl groups to the sum of units other than these units (A) of more than 0.001, particularly more than 0.05 will already provide excellent adhesion to a surface by means of the dihydroxyphenyl groups contained therein. Such a composite material may be directly applied to surfaces as a coating material.

The term "biomolecules" refers to any natural or synthetic peptides or proteins. The biomolecules, in their free form (i.e. before they are grafted to the polyelectrolyte copolymer), contain at least one amino group and/or at least one thiol group. This functional group allows a convenient reaction with a quinone form of the oxidized dihydroxyphenyl group contained in the polyelectrolyte copolymer according to the invention. Biomolecules can then be chemically, generally covalently, grafted to the polyelectrolyte by the reaction of one or more of their amino groups and/or thiol groups with quinone functions of the polyelectrolyte.

The biomolecules may be selected to impart additional functionality to the composite material. For instance, when antimicrobial activity is desired, antimicrobial peptides and/or proteins from bacterial, fungal, vegetal, animal, human origin or any analogous chemical structures obtained by *de novo* design and chemical synthesis can be used. Similarly, antibacterial substances can be used. Examples are but not limited to: nisin, β defensin, magainin, lysozyme, lactoferrin, lactoperoxydase, lipopeptides, endolysin, tritrpticin and other Trp-rich peptides. Further examples of organic antibacterial molecules are chitosan or other antibacterial molecules well-known in the art like triclosan, isothiazolinones, etc.
Other examples of biomolecules of interest are polysaccharides ; an example of antimicrobial polysaccharide is chitosan.

Mixtures of different biomolecules can also be used for preparing the polyelectrolyte composite material according to the invention.

If an organic molecule of interest does not contain an amino- or thiol groups, it may be possible to functionalize it by such a group using well-known organic reactions in order to promote their covalent grafting to the polyelectrolyte.

Depending on the desired application, the amount of biomolecules contained in the polyelectrolyte composite material according to the invention may vary over wide ranges. Generally, the molar ratio of biomolecules to the quinone form of the dihydroxyphenyl group depends on the amount of amino- and/or thiol- groups they contain. The molar ratio amino- and/or thiol- groups provided by the biomolecules to the quinone form of the dihydroxyphenyl group in the polyelectrolyte composite material is preferably lower than 1, more preferably lower than 0.5. Most preferably, this ratio is adjusted such as to graft a minimum of amino- and/or thiol- groups of a biomolecule to the polyelectrolyte in order to avoid denaturation of the biomolecule and/or the crosslinking of the polyelectrolyte composite material by multi-functional biomolecules. If, on the other hand, cross-linking of the polyelectrolyte composite material is desired, the molar ratio amino- and/or thiol- groups to the quinone form of the dihydroxyphenyl group can be optimized in order to react a maximum of amino- and/or thiol- groups of the biomolecule with the quinone groups.
Such composite materials can be advantageously applied to surfaces to provide them with antibacterial/antimicrobial properties and/or other properties, depending on the properties of the immobilized biomolecule. The polyelectrolyte copolymer of the composite of the invention is an effective matrix for the chemical grafting of biomolecules. The quinone function promotes the chemical grafting of biomolecules through the amino- and/or thiol- groups of the biomolecules.
Optionally, only a part of the biomolecules is chemically grafted to the polyelectrolyte copolymer while another part is not chemically grafted. The biomolecules that are chemically grafted will ensure the durability of the function to the polyelectrolyte material while the biomolecules that are present in the polyelectrolyte composite material without the formation of a chemical bond between the biomolecule and the polyelectrolyte will diffuse in the solution. For such a purpose, the molar ratio amino- and/or thiol- groups to the quinone form of the dihydroxyphenyl group in the polyelectrolyte composite material is preferably higher than 0.2, preferably higher than 0.5.

A particularly preferred polyelectrolyte composite material according to the invention comprises the P(DOPA)-*co*-P(DMAEMA⁺) polyelectrolyte as defined above in a form wherein all or part of the dihydroxyphenyl groups are oxidized to their quinone form and nisin as antimicrobial peptide.

The polyelectrolyte composite material of the invention containing biomolecules may be conveniently prepared by contacting
(i) a polyelectrolyte copolymer according to the invention with
(ii) a solution of a biomolecule bearing amino- and/or thiol- groups.

The reaction may conveniently proceed at room temperature in an aqueous medium.

In an advantageous variant of the process according to the invention, the polyelectrolyte copolymer (i) and the solution of the biomolecule (ii) are contacted as solutions in an aqueous medium. Subsequently, the solution is coated onto a surface and dried. Alternatively, it is possible to coat the surface of a device with a polyelectrolyte copolymer according to the invention, and contact the coated surface with the solution of the biomolecule (iii) in order to provide a polyelectrolyte composite material according to the third aspect of the invention.

According to a fourth aspect of the invention, the second and the third aspect discussed above may be combined to provide a polyelectrolyte composite material comprising
(i) an oxidized form of the polyelectrolyte according to the invention, wherein a part of or all of the dihydroxyphenyl groups in the polyelectrolyte copolymer have been oxidized to their quinone form;
(ii) particles of a metal and/or particles of a metal salt; and
(iii) biomolecules grafted to the polyelectrolyte copolymer via reaction of an oxidized dihydroxyphenyl group with an amino or thiol group present in the biomolecule.

As noted with respect to the second embodiment, the metal particles and/or the particles of a metal salt are generally embedded within a matrix formed by the oxidized form of the polyelectrolyte copolymer according to the invention. It should be understood that any reference to an "oxidized form of dihydroxyphenyl group" herein means the quinone form of the dihydroxyphenyl group, in particular a 3,4-benzoquinon-1-yl group.

As in the second or third embodiment, the percentage of the dihydroxyphenyl groups of the polyelectrolyte copolymer of the composite of the invention which are present in their
oxidized form (based on the total number of dihydroxyphenyl groups in the polyelectrolyte copolymer in oxidized or non-oxidized form) is higher than 1 %, preferably higher than 10 % and particularly higher than 30 %. Depending on the use which is made of the polyelectrolyte composite material, the percentage may rise up to 100 %. However, it is to be noted that a polyelectrolyte composite material wherein 100 % or close to 100 % of all dihydroxyphenyl groups are oxidized will be less suitable to adhere to a surface as such. Such a polyelectrolyte composite material will be suitable as an inner layer of a multilayer polymer material according to the invention which is discussed below. On the other hand, polyelectrolyte composite materials which contain a molar ratio of the units (A) with such non-oxidized dihydroxyphenyl groups to the sum of units other than these units (A) of more than 0.001, particularly more than 0.05 will still provide excellent adhesion to a surface by means of the dihydroxyphenyl groups contained therein. Such a composite material may be directly applied to surfaces as a coating material.

Preferably, the polyelectrolyte composite material according to the invention contains the metal and/or the metal salt in the form of nanoparticles as described previously. Depending on the desired application, the amount of metal particles and/or metal salt particles contained in the polyelectrolyte composite material according to the invention may vary over wide ranges. Generally, the molar ratio of metal (including both the elemental form and the metal cations of the salt) to the dihydroxyphenyl groups (including those in their non-oxidized or their oxidized form) contained in the polyelectrolyte composite material is higher than 0.01, preferably higher than 0.1. Ratios below 2 are generally used, and particularly ratios at or below 1 can be conveniently incorporated into the composite material. Formation of metal particles and/or metal salt particles has been described here above.

The polyelectrolyte composite material according to the fourth aspect of the invention may contain one of metal particles or particles of a metal salt in combination with the biomolecules. Preferably, it contains both types of particles in combination with the biomolecules. Particularly preferred are polyelectrolyte composite materials containing particles of elementary silver and particles of a silver halide, such as silver chloride or silver bromide, in combination with biomolecules.

Biomolecules which can be used in the context of this fourth embodiment as well as their preferred forms are the same as they have been defined for the third embodiment above. They are also chemically, generally covalently, grafted to the polyelectrolyte by the reaction of one or more of their amino groups and/or thiol groups with quinone functions of the polyelectrolyte. However, biomolecules which are not chemically grafted to the polyelectrolyte may be additionally present, if desired. Mixtures of different biomolecules can also be used for preparing the polyelectrolyte composite material according to the invention.

The amounts of the biomolecules used for the fourth embodiment correspond to those defined for the third embodiment and are selected depending on the desired application.

Such composite materials can be advantageously applied to surfaces to provide them with antibacterial and/or antimicrobial properties and/or other properties, depending on the properties of the grafted biomolecule. The polyelectrolyte copolymer according to the fourth aspect of the invention is an effective matrix for the in situ formation and stabilisation of metal particles and/or metal salt nanoparticles, and for the chemical grafting of biomolecules. The quinone functions, formed after reduction of metal cations by dihydroxyphenyl groups, may chelate metal nanoparticles, such as silver nanoparticles, through coordination interactions, and consequently, stabilize the nanoparticles. These quinone functions may also promote the chemical grafting of biomolecules through the amino- and/or thiol- groups of the biomolecules.

A particularly preferred polyelectrolyte composite material according to the fourth aspect of the invention comprises the P(DOPA)-*co*-P(DMAEMA⁺) polyelectrolyte as defined above in a form wherein all or part of the dihydroxyphenyl groups are oxidized to their quinone form, together with silver nanoparticles and silver chloride nanoparticles embedded in the polyelectrolyte matrix, and nisin as antimicrobial peptide.

The antibacterial activity of the composite material of the present invention containing silver and silver salt particles, and nisin can be attributed to the active biocidal species Ag⁺, coming from embedded silver particles, e.g. AgCl and Ag°, which are diffusing out of the film, and from the antimicrobial activity of nisin chemically grafted to the film. Because biocidal Ag⁺ is diffusing out of the film, its antimicrobial activity is time limited. On the other hand, because the antimicrobial peptide is chemically grafted to the film, its activity is not time limited and is responsible for the durability of the function. Bacteria are killed when coming in contact with the polyelectrolyte composite material. Optionally, only part of the nisin can be chemically grafted in order to promote some diffusion of the antimicrobial peptide in the solution while some nisin is maintained in the polyelectrolyte composite material for the durability of the function. For such a purpose, the molar ratio amino- and thiol- groups to the quinone form of the dihydroxyphenyl group in the polyelectrolyte composite material is preferably higher than 0.2, preferably higher than 0.5.

The polyelectrolyte composite material according to the fourth aspect of the invention containing metal particles may be conveniently prepared by contacting
(i) a polyelectrolyte copolymer with
(ii) a solution of a metal salt
   to *cause in situ* reduction of the metal ions of the metal salt by dihydroxyphenyl groups in the polyelectrolyte copolymer to form metal particles and
(iii) a solution of a biomolecule bearing amino- and/or thiol- groups in any order of steps. As set out above with respect to the second embodiment, the metal salt used in this process variant is preferably one which contains metal cations susceptible to reduction by the dihydroxyphenyl groups of the polyelectrolyte copolymer according to the invention. Thus, no seperate reducing agent is needed to prepare the metal particles in the polyelectrolyte composite material.

The polyelectrolyte composite material of the invention containing particles of a metal salt may be conveniently prepared by contacting
(i) a polyelectrolyte copolymer according to the invention containing units (B1) with
(ii) a solution of a metal salt
   to *cause in situ* precipitation of a metal salt by an ion exchange with the counter ions of the cationic moiety of the units (B1) and
(iii) a solution of a biomolecule bearing amino- and/or thiol- groups in any order of steps. As set out above with respect to the second embodiment, this process variant is feasible if a metal is chosen for the metal salt solution which forms a salt with the counter ion of the polyelectrolyte copolymer according to the invention which has a sufficiently low solubility or is essentially non-soluble in the medium wherein (i) and (ii) are contacted.

In a particularly preferred embodiment of the process for the production of a polyelectrolyte composite material according to the invention, the two process variants including the in situ reduction and the in situ precipitation in combination with immobilization of the biomolecule proceed concurrently when (i) a polyelectrolyte copolymer according to the invention containing units (B1) is contacted with (ii) a solution of a metal salt. This may be the case, e.g., if the cationic units (B1) in the polyelectrolyte copolymer (i) before the addition of the solution of a metal salt have a halogenide ion as a counter ion and wherein the solution of a metal salt (ii) added to the polyelectrolyte copolymer is a solution containing silver cations such that particles of metallic silver and/or particles of a silver halogenide are formed in a matrix of the polyelectrolyte.

Preferred solutions of metal salts (ii) are aqueous solutions of silver salts, such as AgNO₃, The molar ratio of the dihydroxyphenyl groups to Ag⁺, such as AgNO₃ is generally between 100/0.01, preferably between 10/0.1 and more preferably between 5/0.5 Conveniently, both can be contacted at room temperature, e.g. under stirring.

Advantageously, in the process according to the invention, the polyelectrolyte copolymer (i), the solution of a metal salt (ii) and the solution of the biomolecule (iii) are contacted as solutions in an aqueous medium. Subsequently, the solution may be coated onto a surface and dried. Alternatively, it is possible to coat the surface of a device with a polyelectrolyte copolymer according to the invention, and contact the coated surface with the solution of a metal salt (ii) followed by the solution of the biomolecule (iii) in order to provide a polyelectrolyte composite material according to the invention. The solution of the metal salt and the biomolecule can optionally been mixed prior contacting with the surface that is coated with the polyelectrolyte copolymer according to the invention.

The polyelectrolyte composite materials according to the second to fourth aspect of the invention may be formed from linear, branched or hyperbranched polyelectrolytes as defined above alone, or from mixtures thereof. Generally they contain branched or hyperbranched polyelectrolytes.

### Multilayer Film

Described herein is a multilayer film formed of polyelectrolyte layers will be disclosed in detail in the following. Generally, in multilayer polyelectrolyte films, polyelectrolyte layers are placed on top of each other which carry the same type of charge (i.e. cationic or anionic) within a layer, but which alternate in their charge from one layer to the next. Such films can be conveniently prepared via "layer-by-layer" (LBL) film construction.

It will be understood that any reference to the charge of by a polyelectrolyte or a polyelectrolyte layer herein describes the charge of the ionic groups (cationic or anionic) covalently bound in the polyelectrolyte under consideration.

In the multilayer film described herein, at least the first layer is provided by
a polyelectrolyte copolymer of the composite of the invention as defined above. The "first
layer" referred to in this context is one of the two outer layers of the multilayer film, in particular the one which will contact and provide adherence to the surface eventually coated with the multilayer film. A second polyelectrolyte layer which is placed on top of the first layer has a charge opposite to that of the first layer. One or more further polyelectrolyte layers with charges opposite to those of their respective underlying layer are provided in subsequent order on top of each other. The second layer and the further layer(s) may be independently selected from polyelectrolyte materials known in the art for the preparation of surface coatings or from polyelectrolyte composite materials according to the invention as described above.

Other cationic or anionic polyelectrolytes which may be used together with the polyelectrolyte copolymer of the composite of the invention to form the multilayer films
according to the invention include all cationic or anionic polyelectrolytes known and used by the art for the formation of LBL films. Some examples are poly(4-styrene sulfonate) (PSS), poly(acrylic acid) sodium (or potassium) salt, poly(methacrylic acid) sodium (or potassium) salt, polyglutamic acid, poly(lysine), poly(ethylene sulfonate), poly(ethyleneimine), poly(vinyl-4-alkylpyridinium) salt, poly(methylene)-N,N-dimethylpyridinium salt, poly(vinylbenzyltrimethylammonium) salt poly(diallyldimethyl ammonium chloride), poly(allylamine), dextran sulphate or chitosan. Other examples of cationic polyelectrolytes to be used in this invention are cationic peptides and/or proteins. When antimicrobial activity is desired, cationic antimicrobial peptides and/or proteins from bacterial fungal, vegetal, animal, human origin or any analogous chemical structures obtained by *de novo* design and chemical synthesis can be preferably used. Examples are but not limited to: nisin, β defensin, magainin, lysozyme, lactoferrin, lactoperoxydase, lipopeptides, endolysin, tripticidin (Trp) and other Trp-rich peptides. Moreover, cationic antimicrobial peptides and/or protein or any analogous chemical structures obtained by *de novo* design and chemical synthesis can be grafted onto or combined with the polyelectrolyte copolymer according to the invention or with any adequate polyelectolyte materials known in the art. Examples of anionic polyelectrolytes to be used in this invention are anionic peptides, proteins, glycoproteins, polysaccharides from bacterial fungal, vegetal, animal, human origin or any analogous chemical structures obtained by *de novo* design and chemical synthesis are preferred; Specific non-limiting examples are mucin, hyaluronic acid, heparin, Fucogel® [- α - Gal*p* - (1 → 3) - α - Gal*p*A - 4 - *O* - Ac - (1 → 3) - αFuc*p* - (1 →], milk proteins (caseins), albumin, polyaspartate, alginic acid. Moreover, anionic antimicrobial peptides and/or protein or any analogous chemical structures obtained by *de novo* design and chemical synthesis can be grafted onto or combined with the polyelectrolyte copolymer according to the invention or with any adequate polyelectolyte materials known in the art.

Preferably, the multilayer film comprises alternate layers of (i) a polyelectrolyte of the composite of the invention and (ii) a polyelectrolyte carrying a charge which is opposite to that of the polyelectrolyte (i), wherein the first layer is a layer of a polyelectrolyte copolymer of the composite of the invention and all subsequent layers having
the same charge as the first layer are layers of a polyelectrolyte copolymer of the composite of the invention and/or layers of a polyelectrolyte composite material. In this case, the polyelectrolyte copolymer of the composite of the invention forms
the first layer of the multilayer film and ensures a stable adhesion of the multilayer film to a surface to be coated. At the same time, the polyelectrolyte composite material according to the invention form further inner layers of the multilayer film. For this embodiment, it is preferred that the first layer and the subsequent layers of the polyelectrolyte copolymer of the invention are cationic polyelectrolyte copolymers containing units (B1) or anionic polyelectrolyte copolymers containing units (B2).

It is particularly preferred if the first layer is provided by a cationic polyelectrolyte copolymer of the composite of the invention and all subsequent cationic layers are formed by polyelectrolyte composite materials of the composite of the invention in particular composite materials containing silver particles and particles of a silver halide and/or composite materials containing silver particles, particles of a silver halide and biomolecules. According to such embodiments, high loadings of silver with antibacterial/antimicrobial activity may be provided in a multilayer film coating. The anionic polyelectrolyte layers which form the multilayer film in alternating order with the cationic layers of these embodiments may be formed from an anionic polyelectrolyte copolymer according to the invention, or from other anionic polyelectrolytes known in the art, e.g., from poly-4-styrene sulfonate (PSS), poly(acrylic acid) sodium (or potassium) salt or poly(methacrylic acid) sodium (or potassium) salt.

Of course, the invention also embraces those embodiments wherein the oppositely charged polyelectrolyte (ii) in the above embodiments is also a polyelectrolyte copolymer according to the invention or a polyelectrolyte composite material according to the invention. It further embraces embodiments wherein only a part of the polyelectrolyte layers carrying a cationic charge and/or only a part of the polyelectrolyte layers carrying an anionic charge is formed from the polyelectrolyte copolymer according to the invention or the polyelectrolyte composite material according to the invention, provided that at least one outer layer of the multilayer film (i.e. the first layer) is formed by a polyelectrolyte copolymer according to the invention.

In a preferred embodiment of the multilayer film, the first
layer is a P(DOPA)-*co*-P(DMAEMA⁺) polyelectrolyte copolymer as defined above, and the subsequent layers are bilayers formed from PSS and a P(DOPA)-*co-*P(DMAEMA⁺)-based polyelectrolyte composite material as defined above into which silver nanoparticles and silver chloride nanoparticles are incorporated. Such a multilayer film is also referred to herein as [P(DOPA)-*co*-P(DMAEMA⁺)]/[(PSS/ P(DOPA)-*co*-P(DMAEMA⁺))-silver]ₙ, wherein n denotes the number of bilayers present in the multilayer film. Typically, n ranges from 2 to 100, preferably from 10 to 60.

The thickness of multilayer film is typically from 1 nm to 50 µm, preferably from 10 nm to 1 µm, and more preferably from 20 nm to 800 nm.

The multilayer film may be conveniently prepared by LBL techniques known in the art, e.g. as described in EP 472 990 A2. For example, it is possible to coat a surface with solutions, in particular aqueous solutions, of polycations and polyanions in an alternating manner, and to dry each layer before the next layer is applied. This method is also applicable for the polyelectrolyte composite material, wherein metal particles or metal salt particles are embedded in a polyelectrolyte matrix. Any known coating methods can be used, including dipping or spraying solutions, particularly aqueous solutions, of the polyelectrolytes which can also contain some salts (NaCl for instance), well-known by the art, to affect the deposition mode of polyelectrolytes. Concentrations of salts in the range of 0.01 to 0.2 M are preferred.

The skilled person will appreciate that by the layer by layer deposition method, it is possible to easily tune the leaching rate of metal ions, such as Ag⁺ ions, by varying the number of the deposited bilayers that control the total number of the metal and/or metal salt particles embedded/dispersed within the multilayered film.

The multilayer films according to the fifth aspect of the invention may contain linear, branched or hyperbranched polyelectrolytes as defined above, including mixtures thereof. Generally they contain branched or hyperbranched polyelectrolytes

### Surface Coatings

As a further aspect, the present invention provides a substrate carrying any polyelectrolyte composite material on a surface thereof as a surface coating.
The surface may be provided by an organic or inorganic material. Examples of organic material include plastics. Examples of inorganic substrates include glass, e.g. borosilicate glass, metals, e.g. aluminium, copper, titanium, zinc, gold, iron, steel, aluminium, manganese or stainless steel and coated steel. Suitable surfaces of inorganic substrates may comprise metal oxides such as TiO₂, Al₂O₃, Fe₂O₃, Fe₃O₄, Gd₂O₃, ZnO, Cr₂O₃, SiO₂ or transition-metal-ions such as iron, zinc, copper, manganese, aluminium, magnesium and metal alloys. Preferably, the surface is formed by a metal or glass, and more preferably by stainless steel (abbreviated as "SS" herein) or glass.
Various rigid or flexible substrates can be coated without particular limitations, e.g. medical devices, decorative elements, solar collectors, agricultural films, catalytic surfaces, etc.

Conveniently, the surface coating of a polyelectrolyte composite material according to the invention can be produced by coating the surface with a solution of the polyelectrolyte composite material, particularly an aqueous solution, and drying the solution to form a film. Particularly preferred are aqueous solutions comprising 50 % by volume or more of water, and particularly preferred is water as a solvent. Such a solution can be coated onto a surface with well known coating techniques, such as dipping or spraying and a subsequent drying step to yield a film stably adhering to the surface. It should be understood that any reference to aqueous solutions herein is preferably directed to solutions using only water as a solvent. However, solutions containing a predominant amount (i.e. more than 50 % by weight) of water together with organic solvents are also embraced by this term. Aqueous solutions of the polyelectrolytes can also contain some salts (NaCl for instance), well-known by the art, to affect the deposition mode of polyelectrolytes. Concentrations of salts in the range of 0.01 to 0.2 M are preferred. Multilayer films may be prepared directly on the surface to be coated in a similar manner, i.e. by sequentially coating layers on top of each other until the desired number of layers is achieved.
Typically, the concentration of the solutions or the polyelectrolyte copolymer or polyelectrolyte composite material ranges from 0.001 wt% to 40 wt%, preferably from 0.01 to 20 wt%, more preferably from 0.05 to 15 wt%.

It is particularly advantageous that the polyelectrolyte composite materials and the multilayer films in accordance with the invention will stably adhere to surfaces on which they are coated without any modifying pre-treatment of the surface being required. In particular, no treatment aiming at the production of an electrostatic charge is required, as it is known from prior art surface coating methods, such as a chemical modification of the surface, corona treatment, or pickling with acids. Cleaning of the surface, e.g. with an organic solvent such as acetone, ether or hexane or with a surfactant solution is not considered as a modifying treatment in this context. Moreover, the polyelectrolyte copolymer, polyelectrolyte composite material and the multilayer film in accordance with the invention stably adhere to surfaces in direct contact therewith, i.e. without the need for a primer layer of a different material.

As mentioned above, films of the polyelectrolyte composite material or the multilayer films in accordance with the invention can be co-deposited on the surface of a substrate together with a radical initiator to allow a crosslinking reaction to take place between the chains of the polyelectrolyte copolymer according to the invention. As a result, the durability of the deposited films can be even further increased, and/or the films can be permanently immobilized on the surface. For example, a water soluble thermal free radical initiator can be co-deposited with the polyelectrolyte according to the invention during the formation of a film or a multilayer film, respectively. The final (multilayer) film can then be crosslinked by heating the substrate to a temperature which allows the thermal activation of the free radical initiator. Water soluble photo-initiators can also be used instead of the thermal initiators and co-deposited with the polyelectrolytes during the (multilayer) film formation. Crosslinking of the (multilayer) film can be achieved by its photo-irradiation at the appropriate wavelength which depends of the photo-initiator used. Photo-initiators are all well-known photo-initiators. Water soluble photo-initiators would be preferred. Some examples are the sodium salt of anthraquinone-2-sulfonic acid, triarylsulfonium hexafluorophosphate salts, triarylsulfonium hexafluoroantimonate salts or 4,4'-bis(dimethylamino)benzophenone dihydrochloride.

Another strategy to crosslink the copolymer is to co-deposit the polyelectrolyte composite material or a multilayer films in accordance with the invention which contain dihydroxyphenyl groups in oxidized form with multifunctional molecules containing two or more amino- and/or thiol- groups. Such molecules, which may function as crosslinking agents, may be polyamines, polythiols, polymers bearing amino- and/or thiol- groups, and biomolecules bearing amino- and/or thiol- groups. Polyamines are organic molecules bearing more than one amino-group, preferably primary or secondary amino- groups. Examples of polyamines are, but not limited to, *N*,*N*,*N'*,*N'*-tetrakis(3-aminopropyl)-1,4-butanediamine, Bis(hexamethylene)triamine, ethylenediamine, diaminopropane, diaminobutane, hexamethylenediamine, diethylenetriamine, triethylenetetramine, 4,4'-diaminodiphenylmethane, etc. Polythiols are organic molecules bearing more than one thiol- group. Examples of polythiols are, but not limited to, pentaerythritol tetrakis(2-mercaptoacetate), pentaerythritol tetrakis(3-mercaptopropionate), etc. Polymers bearing amino-groups may be polymers of various structures (homopolymers, random-, statistical-, gradient-, graft-, block-, (hyper)branched copolymers, dendrimers) that bear primary- or secondary- amino-groups at the chain ends of the polymers and/or along the polymer backbone as side groups and that can be prepared by any known existing synthetic methods. Examples of polyamines are polyethylene imine, polyallylamine, poly(2-aminoethyl methacrylate), chitosan, etc. Examples of polymers bearing thiol- groups are all polymers of various structures (homopolymers, random-, statistical-, gradient-, graft-, block-, (hyper)branched copolymers, dendrimers) that bear thiol groups at the chain ends of the polymers and/or along the polymer backbone as side groups and that can be prepared by any known existing synthetic methods. Examples are, but not limited to, polycystein, star shaped polyethylene glycol terminated by thiol groups, etc.

In one embodiment, the surface coating according to the invention may be applied to medical devices, such as prosthesis, as a substrate. In particular in cases where antibacterial and antimicrobial characteristics are desired, the polyelectrolyte composite material of the invention containing metallic silver particles and/or silver salt particles can be advantageously applied as a durable surface coating providing such characteristics stably over extended periods of time. In other cases where antibacterial and antimicrobial characteristics are desired, the polyelectrolyte composite material of the third or fourth embodiment of the invention containing the biomolecules, optionally together with metallic silver particles and/or silver salt particles can be advantageously applied as a durable surface coating providing such characteristics stably over extended periods of time.

In order to improve the durability of the antimicrobial/antibacterial function, the polyelectrolyte composite material of the second or fourth embodiment or the multilayered film comprising such a polyelectrolyte composite material can be reactivated with an active metal, such as silver. The reactivation can be carried out in a very convenient way simply by contacting the coated surface with ions of the metal under consideration, e.g. a solution containing the metal in cationic form. For example, the coated surface can be dipped into a metal salt solution, such as a solution of silver cations, optionally followed by washing with water or a solvent. As will be understood, this reactivation process works particularly well if the polyelectrolyte composite material contacted with the metal ions contains anions (e.g. as counter ions for the units (B1)) which precipitate metal salt particles. As described in detail in the context of the second embodiment according to the invention, a particularly suitable combination is the use of units (B1) which contain a halide anion, such as chloride or bromide, together with silver cations, which precipitate as silver halides upon contact with the halide ions in the polyelectrolyte copolymer. This reactivation process may be carried out once or several times.

In another embodiment, a surface coating of the polyelectrolyte copolymer according to the invention can be used as an anchoring layer for an organic coating, e.g. on an organic or inorganic substrate. Such surface coatings may be polyurethane coating, melamine coating, epoxide resins, a paint. For this embodiment, it is advantageous if a film is formed on the substrate to be coated which comprises a polyelectrolyte copolymer containing units (C), which units (C) carry groups reactive with the organic coating to be anchored.

In yet a further embodiment, the polyelectrolyte copolymer of the composite of the invention can be used as an efficient glue or as an adhesive for various substrates. Examples of substrates are various organic or inorganic substrates. Examples are metallic substrates, metal oxide substrates, glass, plastics, textiles, wood and other cellulosic materials or paper. Examples of plastics are all known organic plastics such as polypropylene, polyethylene, polycarbonate, poly(vinyl chloride), ethylene-vinyl acetate copolymers, polyurethanes, polystyrene or poly(methyl methacrylate).

For this application, a solution of the polyelectrolyte copolymer is deposited onto a substrate and the second substrate is placed on the top. Advantageously, an aqueous solution of the polyelectrolyte copolymer can be used. Prior to deposition of the second substrate, the solution of the polyelectrolyte might be partially or totally dried on the first substrate. It is to be understood that the first and the second substrate may be identical or different materials.

According to still a further embodiment, the polyelectrolyte copolymer of the composite of the invention can be used as an efficient stabilizer for inorganic nanoparticles in liquid media, in particular aqueous media. Inorganic nanoparticles are all known inorganic nanoparticles, such as particles of SiO₂, TiO₂, Fe₂O₃, Fe₃O₄, Gd₂O₃, Au, Ag, AgCl, AgBr, ZnO, Al₂O₃, Pt or Pd. In this context, nanoparticles are particles having a size within the range of 1 to 1000nm, preferably 1 to 500 or 1 to 300 nm.

For this application, the polyelectrolyte copolymer can be added to a solution (or dispersion) of the inorganic nanoparticles, e.g. an aqueous solution or dispersion, or it can be added during the synthesis of the nanoparticles in order to stabilize them as soon as they are formed.

The liquid medium, e.g. an aqueous solution, containing the stabilized nanoparticles according to the invention can be deposited onto different substrates in order to functionalize them with the nanoparticles. Conventional methods such as spraying or dipping can be used for the deposition of the solution.

As noted above, the oxidized form of the polyelectrolyte copolymer of the composite of the invention wherein a part of or all of the dihydroxyphenyl groups in the polyelectrolyte copolymer have been oxidized to their quinone form, can be used for the grafting of biomolecules bearing amino- and/or thiol- groups.

For this application, an aqueous solution of the biomolecules can be added to the aqueous solution of the polyelectrolyte copolymer in its oxidized form (partial or total) in order to covalently graft the biomolecules to the polyelectrolyte copolymer. The liquid medium, e.g. an aqueous solution, containing the biomolecules grafted to the polyelectrolyte copolymer according to the invention can be deposited onto different substrates in order to functionalize them with the biomolecules. Conventional methods such as spraying or dipping can be used for the deposition of the solution.

A multilayer polyelectrolyte composite material film can also be formed. Generally, in multilayer polyelectrolyte films, polyelectrolyte layers are placed on top of each other which carry the same type of charge (i.e. cationic or anionic) within a layer, but which alternate in their charge from one layer to the next. Such films can be conveniently prepared via "layer-by-layer" (LBL) film construction.

It will be understood that any reference to the charge of by a polyelectrolyte or a polyelectrolyte layer herein describes the charge of the ionic groups (cationic or anionic) covalently bound in the polyelectrolyte under consideration. In the multilayer polyelectrolyte composite material film according to the invention, each layer may be formed by successive deposition of solutions of polyelectrolytes containing inorganic nanoparticles which alternate in their charge from one layer to the next. Multilayer polyelectrolyte composite material films which contain different types of inorganic nanoparticles may also be formed.

### Examples

The present invention will be further illustrated by reference to the following nonlimiting examples.

### Materials

Methacryloyl chloride (Aldrich) and triethylamine (Aldrich) were dried over calcium hydride and distilled under reduced pressure. 3,4-dihydroxy-L-phenylalanine (DOPA) (Aldrich, 99%), thionyl chloride (Aldrich, 99 %), [2-(methacryloxy)ethyl] trimethylammonium chloride solution (DMAEMA⁺) (Aldrich, 75 % w.t. in solution in water), poly(sodium 4-styrene sulfonate) (PSS) (Aldrich, Mw = 70 000 g/mol), 2,2'-azobis(2-methylpropionamidine) dihydrochloride (V-50) (Aldrich, 97%) were used as received without further purification. Methylene chloride (CH₂Cl₂) was refluxed over CaH₂ and distilled. Methanol was dried over molecular sieves (3 Å). All other solvents or chemical products were used as received without further purification. Stainless steel (SS) substrates 304 2 R were used

### Synthesis of Monomers

### DOPA methyl ester hydrochloride.

DOPA methyl ester hydrochloride was synthesized by reaction of SOCl₂ with DOPA in dried CH₃OH according to a procedure described in literature (Patel, R. P.; Price, S. J. Org. Chem, 1965, 30, 3575).

### Synthesis of N-methacryloyl 3,4-dihydroxyl-L-phenylalanine methyl ester or methyl 3-(3,4-dihydroxyphenyl)-2-methacrylamidopropanoate.

DOPA methyl ester hydrochloride (9g, 0.0363 mol), in dry CH₂Cl₂ (350 mL) was introduced in a two-neck round-bottom flask equipped with a dropping funnel and a magnetic stirrer, and placed under nitrogen. Et₃N (17.7 mL, 0.127 mol), freshly distilled, was then added. After cooling at 0°C, methacryloyl chloride (3.51 mL, 0.0363 mol), dissolved in CH₂Cl₂ (70 mL) and placed in the ampoule was slowly added under vigorous stirring under nitrogen. The resulting mixture was stirred at room temperature during 48 hours. After reaction, the triethylammonium chloride, formed as a by product, was eliminated by filtration and the excess of reagents was removed under vacuum. The product was recovered as a sticky solid with a product yield of 90 %.¹H NMR (250 MHz, CDCl₃) δ (ppm) 6.8 (m, 3H, Ph), 5.7 (d, 1H, CH₂=C-), 5.3(d, 1H, CH₂=C-), 4.75 (q, 1H, CH-NH-), 3.75 (s, 3H, COOCH₃), 3.05 ( 2H, m, CH₂-Ph), 1.95 (s, 3H, CH₃-C-). ¹³C NMR (100 MHz, CDCl₃) δ (ppm) 172 ppm (1C, -NH-C=O), 168 ppm (1C, -O-C=O), 144.5 (1C, Ph-OH); 144 (1C, Ph-OH), 139 (1C, -C=CH₂), 127.5 (1 C, Ph), 121.5 (1 C, Ph), 120 (-C=CH₂-), 117 (1 C, Ph), 116 (1 C, Ph), 53.5 (1C, -CH-NH), 52 (1C, O-CH₃), 37 ppm (1C, CH₂-Ph), 18 (1C, CH₃-C=CH₂).

### Analytic Methods/Evaluation

*¹H and ¹³C NMR* (400 MHz) spectra were performed at 25°C or 50°C with a Bruker AM 400 apparatus. Chemical shifts (δ in ppm) are given relative to external tetramethylsilane (TMS = 0 ppm) and calibration was performed using the signal of the residual protons of the solvent as a secondary reference.

The Ag nanoparticles were observed using a high resolution *Transmission Electron Microscope* (Phillips/FEI Technai 20) operating at 200 kV. For TEM experiments of the nanoparticles, a drop of the as-prepared suspension was spin-coated (2000 rpm).onto the carbon-coated Cu grids covered by a formvar film.

The powder phases were systematically checked by *X-ray diffraction* (XRD) analysis using monochromatic Cu Kα radiation (l = 1.5406 Å), carried out on a X-ray diffractometer Siemens D5000.

*Spectroscopic ellipsometry (SE) measurements* were done using a GES-SOPRA ellipsometer working in the UV-visible-NIR (250-1000 nm) spectral range with a wavelength resolution of 10 nm at 75° angles of incidence. To extract information from the SE spectra, an optical model of the presumed surface structure has to be built. The interpretation of the SE data is then performed by fitting the calculated response cos Ψ and tan Δ of the optical model to the experimental data by using simulation and non-linear least squared regression analysis. The optical model employed in this paper is as stratified structure of layers with flat and parallel interfaces, each layers being described by their thickness and optical constants. The stainless steel substrate thickness is fixed to 1 mm so that it can be considered as a bulk material, and its optical behaviour is expressed in terms of pseudo optical constants. As the optical constants of the deposited layer are not known, there are described using a Cauchy dispersion relation in order to model the index of refraction of the organic film. The A value in the Cauchy dispersion model that we have employed for the multilayer is equal to 1.465.

*UV-vis absorption experiments* of silver colloidal aqueous dispersions were performed using a Hitachi spectrophotometer (U-3300). UV-vis experiments of multilayered stainless steel substrate were recorded using a Perkinelmer spectrophotometer (lambda 650S) and the different spectra were analyzed in diffuse total reflection mode.

The *antibacterial activity* of nanocomposite multilayered films deposited onto stainless steel substrates against the Gram-negative bacteria *Escherichia Coli* (DH5α) was assessed by a viable cell-counting method.¹³ A freeze-dried ampoule of was opened and the culture was picked up with a micropipette and placed in 2ml of nutrient broth (composition for one litre of nutrient broth (Luria Bertani): 10 g bactotryptone, 5g of extract of yeast, sodium chloride) which was then incubated (Incubator shaker model G25; New Brunswick; Scientific Co. INC; Edison, New Jersey, U.S.A) at 37°C overnight. Then, 200 µL of the culture was placed in 100 ml of nutrient broth and the bacterial culture was incubated at 37°C for 4h. At this stage, the culture of *Escherichia coli* contained ca. 10⁸ cells/ml (absorbance at 600 nm equal to 0.6) and was used for the test. The starting cell concentration was determined by the spread plate method. Upon appropriate dilution with sterilized 0.9 % saline solution, a culture of about 10⁵ cells/mL was prepared and used for antibacterial testing. The functionalized stainless steel (SS) substrates were sterilized by UV irradiation (1h for each face) and exposed to the *E. Coli* cell suspension (15 mL containing about 10⁵ cells/mL). At a specified time, 0.1-mL of bacteria culture was added to 0.9 mL of sterilized 0.9 % saline solution (the solution was sterilized at 121°C for 20 minutes), and several dilutions were repeated. The surviving bacteria were counted by the spread-plate method. At various exposure times, 0.1-mL portions were removed and quickly spread on the nutrient agar. After inoculation, the plates were incubated at 37°C for 24h, and the colonies were counted. Counting was triplicated for each experiment.

The anti-bacterial activity against the Gram-negative *E. Coli* of coated stainless steel with (P(DOPA)-*co*-P(DMAEMA⁺))/[(PSS/P(DOPA)-co-P(DMAEMA⁺)-silver)]ₙ was also evaluated by the modified Kirby-Bauer technique that consists of measuring an inhibition zone of bacterial growth around the film (Traup, W. H.; Leonhard, B. Chemotherapy, 1994, 40, 374) The flat surface of the agar gel medium was inoculated with a suspension of a 24-h culture of *E. Coli* containing about 10⁶ cells/mL, after dilution with a sterile saline solution. Previously sterilized by UV irradiation for 2h, coated and uncoated stainless steels were pressed onto bacteria-overlaid agar. One stainless steel plate was contacted with the culture medium in a Petri dish that was incubated at 37°C for 24 h. The width of the inhibition zone of the bacterial growth was measured.

### Example 1

### Synthesis of P(DOPA)-co-P(DMAEMA⁺) (Fig. 1)

Note: it is to be understood that the structure of the polyelectrolyte in Figs. 1 and 2 serves as a schematic illustration. As explained in detail in the above general part of the specification, the polyelectrolyte copolymer according to the invention may comprise its units in random order and may further comprise bonds formed between the polymer chains which lead to a branched or hyperbranched structure.

The 2-methacryloxyethyltrimethylammonium chloride monomer (DMAEMA⁺, 8.4 mL, 0.038 mol) (6) was solubilized in ultrapure water (75 mL) under nitrogen and the solution was degassed by bubbling of nitrogen for 20 min. At the same time, the V50 initiator (91 mg, 0.000335 mol) was solubilized in ultrapure water (3 mL) under nitrogen and degassed by bubbling of nitrogen for 10 min. In parallel, N-methacryloyl 3,4-dihydroxyl-L-phenylalanine methyl ester (5) (1.8 g, 0.00675 mol), was introduced under nitrogen in a conditioned flask. Then, the aqueous solutions of the 2-methacryloxyethyltrimethylammonium chloride and of the V50 were successively transferred with a capillary under nitrogen in the glass flask containing N-methacryloyl 3,4-dihydroxyl-L-phenylalanine methyl ester. The reactor was heated in an oil bath thermostated at 55°C during 12 hours. The resulting mixture was dialyzed (membrane porosity 3500 Da) against water during 12 hours, followed by lyophilization. The copolymer was recovered with a product yield of 78 % (7.8 g). The digital integration of the ¹H NMR signals gives a molar ratio of DOPA units to DMAEMA⁺ of 13 % and 87 % respectively. ¹H NMR (250 MHz, D₂O) δ (ppm) 6.9 (m, 3H, Ph), 4.5 (s, 2H, CH₂-OC(O)), 4.5 (s, 1H, CH-NHC(O)), 3.9 (m, 2H, CH₂N⁺(CH₃)₃), 3.6 (s, 3H, COOC-H₃), 3.3 (s, 9H, CH₂N⁺(CH₃)₃), 3 (s, 2H, CH₂Ph), 2 and 1 (m, 10H, repeating units of the two monomers).

The UV-visible spectra of the copolymer (Fig. 6) shows only the absorbance characteristic of the unoxidized catechol function from DOPA at λₘₐₓ = 290 nm with the absence of a peak at 392 nm associated to DOPA quinone.

The molecular weight of the copolymer was not determined by size exclusion chromatography (SEC) because of sticking of the copolymer to the SEC columns. In order to determine its molecular weight and to prove its (hyper)branched structure, the copolymer was studied by a combination of dynamic and static light scattering (DLS and SLS, respectively). At first, DLS was used to find the solution conditions at which the macromolecules behave as individual molecules. It turned out that 1 g/L was an appropriate dilution range, and that a concentration of 0.5 mol/L in NaCl was needed in order to screen the interactions between the chains. In these conditions, a hydrodynamic radius (*R*ₕ) of 48 ± 2 nm was obtained with a polydispersity index of 0.4. The size distribution was rather broad, but the measurements were highly reproducible, as attested by the small standard deviation on *R*ₕ.

Static light scattering was then performed for the determination of the gyration radius (Rg) and the molecular weight (M_{w}). Due to the broad size distribution, fitting the data by both Zimm and Berry equations led to similar values of *R*_{g} and M_{w} : around 120 nm and 10⁶ g/mol, respectively. Such a high *R*_{g}/*R*ₕ ratio (*R*_{g}/*R*ₕ = 2.5) is characteristic of branched macromolecular architectures. Copolymers of DOPA and quaternized DMAEMA prepared following our method are thus characterized by a high molecular weight (∼10⁶ g/mol) and a branched architecture.

### Example 2

### Preparation of P(DOPA)-co-P(DMAEMA⁺) / silver nanoparticles composite (8) (Fig. 2)

To a P(DOPA)-*co*-P(DMAEMA⁺) (7) copolymer solution (7g/L, 14 mL, n_{DOPA} = 3 × 10⁻⁵ mol/l), silver nitrate AgNO₃ (n = 3 × 10⁻⁵ moL), dissolved in a little amount (1mL) of water was slowly added under vigorous stirring at room temperature, protected from light.

When AgNO₃ was added to an aqueous solution of P(DOPA)-*co*-P(DMAEMA⁺) copolymer, a milky yellow/brown suspension was quasi-instantaneously observed, corresponding to the formation of silver nanoparticles. Three silver/polymer composites containing different Ag⁺ ion to DOPA moieties molar ratios of 1/1, 0.5/1, and 0.1/1 were prepared by adding different amounts of silver nitrate. The 1/1, 0.5/1 and 0.1/1 composites suspensions are stable without precipitation during two days. No change in the size and in the dispersion of the produced colloids was observed by transmission electronic microscopy (TEM) with a variation of the (AgNO₃/DOPA) molar ratio. Thereby, in the following study, the 1/1 AgNO₃/DOPA molar ratio was used.

XRD analyses were performed to establish the nature of the *in-situ* synthesized silver nanoparticles and the overall composition of the samples. Firstly, XRD experiments were performed on the P(DOPA)-*co*-P(DMAEMA⁺) copolymer/silver composite material compared to the diffraction pattern of the non silver-loaded copolymer (completely amorphous). Resolution of the XRD spectra was low due to (i) the very low amount of silver nanoparticles within the organic matrix and to (ii) peak broadenings, characteristic of small crystallites, which made the interpretations impossible. In order to solve this problem, model compounds were used for the preparation of larger particles. Because copolymers contained quaternary ammonium and DOPA moieties (7, Fig. 1), DMAEMA⁺ (6, Fig. 1) and DOPA methyl ester hydrochloride (3, Fig. 1) were used separately as models for the formation of silver particles. Firstly, an aqueous solution of AgNO₃ (1.7 M) was added to a solution of the quaternary ammonium salt monomer (DMAEMA⁺, 0.034 M) (6) in a 1/1 molar ratio (n AgNO₃ = n DMAEMA⁺ = 1.7 × 10⁻³ mol), leading to the rapid formation of a grey precipitate contrary to a yellow-brown stable dispersion in the case of the copolymer. XRD analysis performed on the DMAEMA⁺ monomer/AgNO₃ powder exhibited diffraction peaks (A) that were characteristic of the cubic crystal of AgCl (Chlorargyrite, Z = 4, Space group Fm-3m; Figure 3(A)). AgCl was formed from the on-site precipitation of the chloride counter-anions of DMAEMA⁺ by the slow addition of AgNO₃ to the DMAMEA⁺ solution. When the same AgNO₃ aqueous solution was added to DOPA methyl ester hydrochloride (3) (Fig. 3(B)) in a 1/1 molar ratio, a brown precipitate was rapidly formed. XRD analysis on the product collected after lyophilisation clearly evidenced the presence of different silver species. Indeed, the characteristic peaks of the AgCl crystal were observed in combination with the characteristic peaks associated to Ag° particles. These Ag° particles were evidenced by the new diffraction peaks, at about 2θ = 38° and 44°, which corresponds to the 111 and 200 lattice plains of metallic Ag°. These two types of silver particles (AgCl and Ag°) came from two different mechanisms occurring at the same time, *i.e.* the precipitation of the chloride counter-anions associated with the DOPA methyl ester hydrochloride (3) and the AgNO₃ reduction by the hydroquinone moieties into Ag° particles (Fig. 2). From this comparative study, it is reasonable to conclude that the P(DOPA)-*co*-P(DMAEMA⁺) copolymer/silver composite material contained both AgCl and Ag° nanoparticles.

Transmission electronic microscopy was used to characterize the size and morphology of the yellow silver colloidal dispersion P(DOPA)-*co*-P(DMAEMA⁺) composite. TEM observations (Fig. 4 (A) and (B)) clearly indicated the presence of different populations of silver NPs. Large aggregates (100-500 nm; Figure (A)) with an irregular shape were observed in the presence of very small and spherical nanoparticles in the 5 nm range (Figure 4 (B)). The different NPs shapes and sizes are the results of different chemical processes, occurring after the addition of the silver nitrate solution into the polyelectrolyte solution. The greatest NPs could be attributed to the formation of insoluble AgCl nanocrystallites, resulting from the precipitation of Cl⁻ counter-anions associated to the copolymer. On the other hand, the smallest spherical nanoparticles were expected to be Ag° metallic nanoparticles formed by the chemical reduction of AgNO₃ by the hydroquinone moieties of DOPA of the copolymer. By comparison of the silver particles size formed by adding AgNO₃ to the copolymer (Figure 4 (A), (B)) or to the DOPA methyl ester hydrochloride 3 (Figure 4 (C)) (n AgNO₃ = n DOPA= 2 × 10⁻⁶ mol), much agglomerates with broader and larger size distribution (until several µm) were observed in case of the DOPA methyl ester hydrochloride. From this observation, it is clear that the copolymer is an effective template for the *in situ* formation and stabilisation of AgCl and Ag° nanoclusters.

### Example 4

### Preparation and characterization of silver particles embedded in multilayered polyelectrolyte stainless steel substrates

### Multilayer film preparation

The stainless steel substrates were cut to a size of 4 cm × 4 cm for UV-vis and ellipsometry experiments and to a size of 1.5 cm × 2.5 cm for antimicrobial tests. The SS foils were cleaned and degreased with heptane, methanol and acetone without any other drastic pretreatment. The polyelectrolyte multilayers were built up on the cleaned SS using a dip technique at room temperature. In a typical coating preparation, a substrate was dipped in an aqueous solution of the P(DOPA)-*co-*P(DMAEMA⁺) (7 g/L, pH ∼ 7) for 2 min, rinsed twice with deionized water in two different bathes for 1 min, and then dipped into an aqueous solution (7 g/L) of PSS for 2 min, followed by rinsing with water and drying with a flow of nitrogen. Typically, the dippings were performed in pure water without any addition of NaCl. This cycle could then be repeated as necessary to obtain the desired number of layers. For silver loaded in multilayered films, the substrate was dipped in an aqueous suspension of P(DOPA)-*co*-P(DMAEMA⁺) (7 g/L) containing Ag nanoparticles for 2 min at room temperature followed by the dipping into the PSS solution, using the procedure described earlier. All future references to the multilayer thin films hereinafter will be denoted (P(DOPA)-*co*-P(DMAEMA⁺))/[(PSS/P(DOPA)-*co*-P(DMAEMA⁺))]ₙ or (P(DOPA)-*co*-P(DMAEMA⁺))/[(PSS/ P(DOPA)-*co*-P(DMAEMA⁺)-silver)]ₙ, where *n* is the number of bilayers deposited onto SS substrate.

The dual-functional P(DOPA)-*co*-P(DMAEMA⁺) polycation-protected silver colloid (7 g/L) was then deposited onto stainless steel (SS) by the layer-by-layer technology in order to promote the surface with anti-bacterial properties. The first polycation layer was constituted of P(DOPA)-*co*-P(DMAEMA⁺) as adhesive promotor, followed by polystyrene sulfonate (PSS) as polyanions. The next polycations layers were the silver-loaded P(DOPA)-*co*-P(DMAEMA⁺) composite material.

The polyelectrolyte multilayer film was build by the dipping method alternating deposition of polyanions (PSS) and polycations, as detailed in the experimental part. The composite polyelectrolyte multilayer films is schematically represented in Fig. 2.

UV-Vis spectroscopy in total reflectivity instead of absorbance mode was used to monitor the layer by layer assembly process of [P(DOPA)-coP(DMAEMA⁺)]/[(PSS/P(DOPA)-*co*-P(DMAEMA⁺))-silver]ₙ.

The experimental data were converted to arbitrary units of absorbance by a mathematic operation: - log (*R*/*R₀*); where *R₀* corresponds to the reflection coefficient of the initial uncoated SS substrate and R represents the total reflection of the substrate coated by a [(PSS/P(DOPA)-co-P(DMAEMA))-silver] bilayer. Figure 6 shows the UV-Vis absorption spectra of [P(DOPA)-co-P(DMAEMA)]/[(PSS/P(DOPA)-coP(DMAEMA))-silver]*ₙ* multilayers (with n = 1-12) on SS. From this figure, we observed an additional absorption at 225 nm which was not detected in the UV-visible absorption spectra of silver NPs embedded in P(DOPA)-co-P(DMAEMA) (figure 5). This absorption corresponds to the aromatic ring of PSS. The absorption at 290 nm is characteristic of the DOPA moieties. Moreover, from the bilayer 8, Figure 6 reveals clearly broad absorption edges located to around 400 nm, which can be attributed to silver NPs (Ag° and AgCl) embedded within the films and to absorption peak of oxidized DOPA. These UV-vis spectroscopy measurements evidenced the insertion of silver NPs inside the polyelectrolyte multilayer films.

Successful composite multilayer films were also evidenced by the SS substrate gradually changing from transparent to opaque over the course of deposition. From the inset of figure 6, it can be seen that the absorbance of stainless steel-supported multilayer P(DOPA)-*co*-P(DMAEMA⁺)/[(PSS/P(DOPA)-*co*-P(DMAEMA⁺))-silver]ₙ film at 400 nm increased proportionally with the number of bilayers, *n.* This linear increase of absorption indicated that the same amount of [(PSS/P(DOPA)-*co-*P(DMAEMA⁺))-silver] bilayers was deposited at each LbL cycle.

The build-up of the multilayered polyelectrolytes on SS substrates was additionally confirmed by the ellipsometric experiments. Non loaded-silver [P(DOPA)-*co-*P(DMAEMA⁺)/PSS]ₙ multilayer films were studied because the theoretical models used to determine the film thickness are only applicable to transparent organic film. The presence of silver nanoparticles within the matrix affects the optical constants, and thus, the models are not relevant to the final thickness. Figure 7 represents the evolution of the film thickness of a [P(DOPA)-*co*-P(DMAEMA⁺)/PSS]ₙ multilayer obtained in pure water and in 0.15 M NaCl by the alternated dipping method. In both cases, the layer by layer deposition process proceeds in a linear and reproducible manner up to at least 15 bilayers. The increase in thickness with each additional bilayer suggests regular deposition of P(DOPA)-*co*-P(DMAEMA⁺) and PSS at each immersion cycle. The bilayer thickness assembled from strong polyelectrolytes, which is the case for both used polyelectrolytes in this study, in the absence of any salt, is known to be quite small (about 5 Å). From Figure 7, the bilayer thickness grew with increasing salt concentration. The addition of salt reduces the mutual electrostatic repulsion of the polymer chains and involves changes in the chain conformation and molecular shape of the polyelectrolytes in aqueous solutions. The polymer coils are becoming denser and denser, and are rather adsorbed as coils than in a flat conformation. The chain conformation is changed to an extended, rodlike molecule to a three-dimensional random coil. The thickness of individual polyelectrolyte layers is increased and so the overall thickness also.

### Example 5

### Antibacterial activity of the composite silver embedded multilayered polyelectrolyte stainless steel substrates

The anti-bacterial activity against the Gram-negative bacteria *E. Coli* of [P(DOPA)-*co*-P(DMAEMA⁺)]/[PSS/(P(DOPA)-*co*-P(DMAEMA⁺))-silver]ₙ (with n = 60) films with a thickness of approximately 120 nm onto stainless steel surface (∼ 4 cm²) was first tested by determining the width of the inhibition zone around the coated surfaces through the disk-diffusion test (also known as the Kirby-Bauer method). For the coated substrates, the positively charged ends of the film enable the interaction with the negatively charged microbial cell membranes of the *E. Coli.* Stainless steel surfaces, before and after coating with P(DMAEMA)]/[PSS/(P(DOPA)-co-P(DMAEMA))]₆₀, did not inhibit the growth of *E. Coli.* Contrary, the coated [P(DOPA)-*co*-P(DMAEMA)/(PSS/ P(DOPA)-*co*-P(DMAEMA)-silver]₆₀, placed on the bacteria-inoculated agar plates, killed the bacteria under and around them. We observed distinct inhibition zone (clear areas with non bacterial growth) equal to 2.5 mm around the stainless steel substrate. The observed inhibition zone indicated that active biocidal species Ag⁺, coming from embedded AgCl and Ag° nanoparticles in the multilayered polyelectrolyte film, were diffusing out of the film. The biocidal mechanism is mainly due to the leached Ag⁺ ion. The AgCl and Ag° NPs acted as effective reservoirs for the release of biocidal Ag⁺ ions. AgCl NPs (nanoparticles) provide a source of silver ions and for Ag° NPs, the Ag⁺ ions are supposed to be produced *via* an oxidation step at the Ag° silver NPs surface.

The kinetics of anti-bacterial activity of different multilayer films coated substrates toward *E. Coli* were then investigated by the viable cell-counting method. The number of viable cells in the suspension, in contact with the small substrate, was counted after incubation during a night by dilution of the samples. Figure 8 shows a plot of the log(number of survivors) against the exposure time when the same amount of *E. Coli* (10⁵ cells/mL of bacteria) was exposed to an uncoated substrate, a non-silver-loaded P(DOPA)-*co*-P(DMAEMA)/[(PSS/P(DOPA)-*co*-P(DMAEMA)]₆₀ coated substrate and to films containing different amounts of silver-embedded bilayers: (i) 60 bilayers (P(DOPA)-*co*-P(DMAEMA)/[(PSS/P(DOPA)-*co*-P(DMAEMA)-silver]₆₀), (ii) 45 bilayers (P(DOPA)-*co*-P(DMAEMA)/[(PSS/P(DOPA)-*co*-P(DMAEMA)-silver]₄₅) and (iii) 30 bilayers (P(DOPA)-co-P(DMAEMA)/[(PSS/P(DOPA)-co-P(DMAEMA)-silver]₃₀) coated stainless steel substrates. From Figure 8, P(DOPA)-coP(DMAEMA)/[(PSS/P(DOPA)-*co*-P(DMAEMA)]₆₀ coated substrate was more efficient than the non coated initial substrate, which can be explained by the presence of bacteriostatic quaternary ammonium salts from DMAEMA⁺ moieties. As shown by Figure 8, the substrates coated with silver-immobilized multilayer films possessed a very enhanced anti-bacterial activity in comparison with the non loaded silver coating. This enhanced antibacterial activity demonstrated that the Ag⁺ release was responsible for the antimicrobial properties.

By the layer by layer deposition method, it is possible to easily tune the leaching rate of Ag⁺ ion by varying the number of the deposited bilayers that control the total number of the silver particles dispersed within the nanohybrid coating. The substrate functionalized by silver loaded in 60 bilayers was able to kill the bacteria cells within 120 min of contact. This anti-microbial activity was higher compared to the films formed with 45 and 30 bilayers, which could be easily explained by lower amounts of embedded silver NPs.

After a given time, the totality of the bactericide within the coating will be released. Indeed, after a first use, the multilayer film was less active than the initial functional substrate (Figure 10). After the total depletion of embedded silver, the coatings will retain a residual antibacterial activity due to the immobilized quaternary ammonium salts within the copolymer. In order to improve the durability of the functionality, the substrate was reactivated with biocidal silver by dipping the substrate into a 0.1 M silver nitrate solution during one hour, followed by washing with deionized water in order to remove the excess of Ag⁺. Figure 9 clearly shows that the reactivated substrate involved a high anti-microbial activity comparable to that one obtained for the initial substrate.

### Example 6

### Synthesis of P(DOPA)-co-P(MAA)

Methacrylic acid (MAA, 2.76 g, 0.032 mol) (6) was solubilized in ultrapure water (40 mL) and the pH was adjusted to ∼ 8.5 by the addition of Na₂CO₃. The solution was then degassed by bubbling nitrogen for 20 min, and then added to a flask containing N-methacryloyl 3,4-dihydroxyl-L-phenylalanine methyl ester (5) (2 g, 0.0071 mol) under nitrogen. A solution of the initiator, 4,4'-azobis(4-cyanopentanoic acid) (V501 (Wako Chemicals), 46.7 mg, 1.66 10⁻⁴ mol) in solution in water at pH ∼ 8.5 (adjusted by the addition of Na₂CO₃) was degassed by bubbling nitrogen for 10 min before being added to the mixture of monomers under nitrogen. The mixture was then heated at 65°C under nitrogen and stirred for 24h. The mixture was then dialyzed against water and the product lyophilized. The copolymer was recovered with a product yield of 63 % (3 g). The digital integration of the ¹H NMR signals gives the composition of the copolymer: 13 % of DOPA units and 83 % of MAA units.

### Example 7

### Benefit of P(DOPA)-co-P(DMAEMA⁺) adhesion promoter on the antimicrobial properties of the (PAA-nisin)5 multilayer compared to the commercial polyethylene imine (PEI) adhesion promoter used as first layer.

The ISO846 method C antimicrobial test with Bacillus subtilis strain has been performed on (PAA-nisin)5 multilayers constructed with P(DOPA)-co-P(DMAEMA⁺) or PEI (MW∼25000, sigma-Aldrich, ref 40827-7) as first layer. The multilayer is made of polyacrylic acid PAA (MW=1800g/mol, Sigma-Aldrich, ref. 323667) and antimicrobial nisin peptide (Mw = 3,5 kDa, Nisaplin® ex Danisco) synthetised by Lactococcus lactis and active against Gram + bacteria. Stainless steel coupons were first dipped during 10 min at RT in a P(DOPA)-co-P(DMAEMA⁺) (2g/l) solution or in a PEI (2g/l) solution and rinsed twice one minute with water. Multilayers were then built by alterning deposition of 5 bilayers of negative and positive polyelectrolytes. In that aim, stainless steel coupons covered by a first layer of glue were dipped 2 minutes in PAA (2g/l, NaCl 150 mM), rinsed twice with water and then dipped 2 minutes in nisin (2g/l, phosphate buffer, pH 6) rinsed twice with water. Figure 10 clearly indicates that the use of P(DOPA)-co-P(DMAEMA⁺) -based adhesion promoter as first layer of the (PAA-nisin)5 multilayer improves the subsequent antimicrobial properties of the lbl coating.

### Example 8

### Antimicrobial activities of the biomolecules nisin, 4K-C₁₆ and Trp11 embedded in a multilayer constructed on stainless steel.

ISO22196 and ISO846 method C antimicrobial testing of several antimicrobial biomolecules embedded in a multilayer constructed on stainless steel surfaces are shown in figure 11. Biomolecules nisin, 4K-C₁₆ (Genescript) and Trp11 (Genescript) have been used alone or in combination with pollyallylamine PAH (Mw = 500000-600000, Sigma-Aldrich) as positive polyelectrolyte and PAA (Mw 1800) as negative polyelectrolyte. Five bilayers have been deposited on clean stainless steel surfaces. P(DOPA)-co-P(DMAEMA⁺) has been used as first layer. Nisin is a 34 AA peptide (Mw = 3,5 kDa) synthetised by *Lactococcus lactis.* 4K-C₁₆ is a lipopeptide (Mw=768 Da) made of 4 lysines and a C16 hydrophobic tail. Tripticidin (Trp11) (Mw=1603 Da) is an eleven amino acid peptide rich in proline and tryptophan (KKFPWWWPFKK).

Two ISO antimicrobial tests have been performed to ensure proper characterization.

First, the ISO846C test (or agar diffusion test) in which the surface to be characterized is covered by a thin layer of LB agar containing bacteria (5.10⁵ bacteria/ml) and 2,3,5-triphenyltetrazolium chloride dye. After overnight incubation at 37°C, living bacteria appear pink/purple. This test can be quantified by counting the number of living bacteria per square centimeter of substrate.

Second, the ISO22196 (or JISZ2801) test in which a suspension of living bacteria (5.10⁶ bacteria/ml LB) is incubated on the surface to be tested in a humid atmosphere for 24h at 37 °C. After 24h incubation, the suspension of bacteria is recovered and living bacteria enumerated on plate count agar after adequate serial dilutions (quantitative test)

Figure 11A shows that at the optimum nisin concentration of 2g/l, only 4 CFU/cm2 are visible on the treated surface compared to several hundreds on the untreated stainless steel surface.

Figure 11B shows that the (P(DOPA)-co-P(DMAEMA⁺))-(PAA-4KC₁₆/PAH)5 multilayer is highly active against gram negative *E. coli* bacteria.

Figure 11C shows that the (P(DOPA)-co-P(DMAEMA⁺))-(PAA-Trp11/PAH)5 multilayer is highly active against gram negative *E. coli* bacteria.

### Example 9

### Combination of several biomolecules in the polyelectolyte multilayer for a broad antimicrobial activity of the film

**Fig 12** **A** shows that the (P(DOPA)-co-P(DMAEMA⁺))-(PAA-mix nisin 0.4g/L/Trp11 4g/L)5 multilayer is active against gram positive and gram negative bacteria.

**Fig 12** **B** shows that the (P(DOPA)-co-P(DMAEMA⁺))-(PAA-mix nisin 0.4g/L/4KC₁₆ 4g/L)5 multilayer is active against gram positive and gram negative bacteria.

### Example 10

### Antimicrobial and antiadhesion activity of multilayers thanks to the combination of bactericide and antiadhesion biomolecules in the same multilayer.

| Multilayer | DO₅₇₂ S.epi | DO₅₇₂ No bacteria, only nutritive media | Delta Absorbance |
|---|---|---|---|
| (Mucin-Nisin)₅ | 0,226 | 0,223 | 0,003 |
| (Mucin-Nisin)₅-Mucin | 0,317 | 0,209 | 0,108 |
| (Mucin-PAH)₅ | 0,588 | 0,365 | 0,223 |
| (Mucin-PAH)₅-Mucin | 0,503 | 0,28 | 0,223 |
| (PAA-Nisin)₅ | 0,263 | 0,109 | 0,154 |
| (PAA-Nisin)₅-PAA | 0,362 | 0,155 | 0,207 |
| Stainless steel | 0,245 | 0,111 | 0,134 |

| | | | |
|---|---|---|---|
| Buffer alone DO 572 nm = 0,087 | | | |

The first layer on stainless steel is P(DOPA)-co-P(DMAEMA⁺) (15 mol % DOPA)

Stainless steel is first coated by a layer of the positive glue: P(DOPA)-co-P(DMAEMA⁺) (15 mol% DOPA; see example 1). Antimicrobial and anti-adhesion multilayers have then been constructed by alterning nisin as positive polyelectrolyte and mucin (Mucin from porcine stomach, Type III, Sigma-Aldrich, ref M1778) as negative polyelectrolyte in the multilayer architecture. The amount of proteins attached to the multilayer surface after repeated incubation with bacteria and extensive washing is measured using a protein assay kit using bicinchoninic acid (BCA)supplied by Pierce (ref 23227, sensitivity 5 µg protein/ml if 40 minutes incubation at 60°C). In that aim, a *S. epidermitis* ATCC12228 inoculum is first deposited on the surface during 2 days at 37°C, the surface is then rinsed with diluted nutritive media and a fresh inoculum of *S. epidermitis* is re-deposited on the surface for 3 days at 37°C. Surfaces are finally thoroughly rinsed with water and proteins quantified thanks to the BCA kit. The BCA mix is directly put on the surface and the surface is scrapped with a tip in a regular way. The DO572nm of the collected volume is measured. Controls are performed on each kind of sample with nutritive media only (without any *S. epidermitis* bacteria) in order to measure the contribution of the multilayer itself and of the nutritive medium. The amount of proteins remaining on the surface after extensive washing is given by the DO572 nm with *S. epidermitis* minus the DO572 nm without *S. epidermitis.* This value called delta absorbance in this table gives an idea of 'easy cleaning' property of the surface. The lower is the delta absorbance value, the easier the cleaning of the surface.

In this example, several multilayers have been built: (1) (Mucin + nisin)5 with nisin as last layer, (2) (Mucin + nisin)5 with mucin as last layer, (3) (Mucin + PAH)5 with PAH (MW 50000-60000) as last layer, (4) (Mucin + PAH)5 with mucin as last layer and compared to multilayers with antimicrobial peptides only (5) (PAA + nisin)5 with nisin as last layer (6) (PAA + nisin)5 with PAA as last layer. An inoculum of S. *epidermitis* has been deposited on the surface as described above and the amount of proteins remaining on the surface after repeated incubation with *S. epidermitis* bacteria and extensive washing is measured with the BCA kit. This table clearly highlights that the multilayer (mucin-nisin)5 gives the best easy cleaning candidate.

### Example 11

### Preparation of P(DOPA)-co-P(DMAEMA⁺)/antibacterial peptide composite material and antibacterial activity

### Solutions preparation:

1. 120 mg of P(DOPA)-co-P(DMAEMA⁺) (15 mol% DOPA) were dissolved in 60 ml of milliQ water
2. The silver nanoparticles were formed by slowly adding an aqueous AgNO₃ solution (11 mg in 500 µl of milliQ water) in the copolymer solution under darkness and vigorous stirring at room temperature. The final suspension was stirred for 2 h. This solution is named "solution A".
3. To 30 ml of this solution A were added 51 mg of Trp11. The pH of the solution was adjusted between 8,5-9 in order to get the primary amines deprotonated and promote the covalent grafting of the peptide on the polyelectrolyte (by the reaction of the primary amine of peptide with the quinone groups of the polyelectrolyte). The reaction was conducted during two hours at room temperature under stirring. The solution is named "solution B".

### Coatings preparation:

A. Coating A: coating with non-dialyzed polyelectrolyte material:
   1. Steel is first dipped in an aqueous solution of P(DOPA)-co-P(DMAEMA⁺) (15 mol% DOPA; 2g/L) as an anchoring layer for 2 minutes.
   2. The surface is then dipped in pure water to remove free polymer.
   3. The surface is dipped in an aqueous solution of polystyrene sulfonate (Mn = 70000 g/mol).
   4. The surface is dipped in water to remove free polystyrene sulfonate.
   5. The surface is dipped in the solution B.
   6. Then steps 2, 3, 4 and 5 are repeated until 20 bilayers are constructed.
B. Coating B: coating with dialyzed polyelectrolyte material:
   1. Steel is first dipped in an aqueous solution of P(DOPA)-co-P(DMAEMA⁺) (15 mol% DOPA; 2g/L) as an anchoring layer for 2 minutes.
   2. The surface is then dipped in pure water to remove free polymer.
   3. The surface is dipped in an aqueous solution of polystyrene sulfonate (Mn = 70000 g/mol).
   4. The surface is dipped in water to remove free polystyrene sulfonate.
   5. Prior to deposition, solution B is dialyzed for 24h against water (dialysis membrane from Spectra/Por with a cut-off of 3500 g/mol) in order to remove silver and tripticidin (molecular weight = 1577 g/mol) that is not covalently bond to the polyelectrolyte. After dialysis, the surface is dipped in the dialyzed solution B.
   6. Then steps 2, 3, 4 and 5 are repeated until 20 bilayers are constructed.

### Antibacterial activity:

The antibacterial activities of these films were evaluated against E.Coli using the viable cell-counting method. The number of viable cells in the suspension, in contact with the small substrate, was counted after incubation during a night by dilution of the samples. Figure XX shows a plot of the log(number of survivors) against the exposure time when the same amount of *E. Coli* (10⁵ cells/mL of bacteria) was exposed to uncoated stainless steel (initial stainless steel), stainless steel coated with non-dialyzed polyelectrolyte material (coating A) and stainless steel coated by dialyzed polyelectrolyte material (Coating B).

The following figure demonstrates that coatings A and B are antibacterial. Importantly, after dialysis, some antibacterial activity is maintained (see coating B), thanks to the covalent bonding of tripticidin to the polyelectrolyte material that avoids the leaching of the antibacterial peptide out of the coating and consequently, the loss of the antibacterial activity. This is highly desirable for the durability of the functionality.

## Claims

1. A composite material comprising:
(i)A polyelectrolyte copolymer comprising:
(a) a first type of identical or different units (A) each comprising one or more dihydroxyphenyl groups such that sidechains are present along the backbone of the polyelectrolyte copolymer which contain at least one dihydroxyphenyl group each, wherein a part or all of the dihydroxyphenyl groups have been oxidized to their quinone form; and
(b1) a second type of identical or different units (B1) each comprising a cationic moiety, or
(b2) a second type of identical or different units (B2) each comprising an anionic moiety.
and
(ii) biomolecules grafted to the polyelectrolyte copolymer via reaction of an oxidized dihydroxyphenyl group with an amino or thiol group present in the biomolecule.

2. The composite material according to claim 1 wherein
the units (A) result from the polymerization of one or more types of monomers of formula (1a): 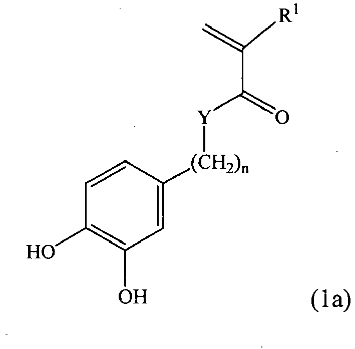 wherein R¹ is a hydrogen atom or an alkyl group which may be unsubstituted or substituted by one or more substituents, Y is a divalent linker and n is an integer selected from 0 to 5.

3. The composite according to anyone of claim 1 or 2 wherein
units (B1) or (B2) result from the polymerization of one or more types of monomers of formula (6): 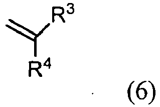 wherein R³ is selected from hydrogen or alkyl which may be unsubstituted or substituted by one or more substituents and R⁴ is either
(i) a cationic group, or an alkyl, aryl, ester or amide group substituted at least with a cationic group in the case of unit (B1); or
(ii) an anionic group, or an alkyl, aryl, ester or amide group substituted at least with an anionic group in the case of unit (B2).

4. The composite according to anyone of claim 1 to 3 wherein
The polyelectrolyte copolymer, further comprising units (C) resulting from the polymerization of one or more types of monomers of formula (7): 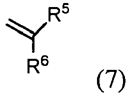 wherein R⁵ is selected from hydrogen or alkyl which may be unsubstituted or substituted, and R⁶ is selected from an ester group; an amide group; an amino group; an aryl group which may be substituted by a polar group; an alkyl group which may be substituted by a polar group or by a glycoside; or a heterocyclic group which may be substituted by a polar group.

5. The composite material according to anyone of claim 1 to 4 wherein The polyelectrolyte copolymer comprises branched or hyperbranched polyelectrolyte molecules wherein at least two polyelectrolyte polymer chains are linked to each other by a covalent bond formed via a dihydroxyphenyl group contained within unit (A).

6. The composite material according to anyone of claim 1 to 5 comprising :
(i) an oxidised form of the polyelectrolyte wherein part of or all of the dihydroxyphenyl groups in the polyelectrolyte copolymer have been oxidized to their quinone form;
(ii) particles of a metal and/or particles of a metal salt; and
(iii) biomolecules grafted to the polyelectrolyte copolymer via reaction of an oxidized dihydroxyphenyl group with an amino or thiol group present in the biomolecule.

7. A process for the production of the composite material according to any one of claim 1 to 5, comprising the steps of contacting
(i) a polyelectrolyte copolymer , with
(iii) a solution of a biomolecule or a mixture of different biomolecules containing at least one amino or thiol group to allow the chemical grafting of the biomolecule(s) to the polyelectrolyte copolymer.

8. A process according to claim 7 comprising the step of contacting :
(i) a polyelectrolyte copolymer , with
(ii) a solution of a metal salt to cause in situ reduction of the metal ions of the metal salt by dihydroxyphenyl groups in the polyelectrolyte copolymer to form metal particles and in situ precipitation of a metal salt by an ion exchange with the counter ions of the polyelectrolyte copolymer
(iii) a solution of a biomolecule or a mixture of different biomolecules containing at least one amino and/or thiol group to allow the chemical grafting of the biomolecule(s) to the polyelectrolyte copolymer.

9. A substrate carrying a composite material according to any of claims 1 to 6 on a surface thereof.

10. The substrate according to claim 9, wherein the surface is a metal surface.

11. The substrate according to claims 9 or 10, which is a medical device.

12. Use of a composite material according to any of claims 1 to 6 to impart antimicrobial and/or antibacterial properties to a substrate.

## Patentansprüche

1. Verbundwerkstoff, umfassend:
(i) ein Polyelektrolyt-Copolymer, umfassend:
(a) einen ersten Typ von gleichen oder verschiedenen Einheiten (A), die jeweils eine oder mehrere Dihydroxyphenylgruppen umfassen, so dass Seitenketten entlang der Hauptkette des Polyelektrolyt-Copolymers vorliegen, die mindestens je eine Dihydroxyphenylgruppe enthalten, wobei die Dihydroxyphenylgruppen teilweise oder ganz zu ihrer Chinon-Form oxidiert worden sind; und
(b1) einen zweiten Typ von gleichen oder verschiedenen Einheiten (B1), die jeweils eine kationische Gruppierung umfassen, oder
(b2) einen zweiten Typ von gleichen oder verschiedenen Einheiten (B2), die jeweils eine anionische Gruppierung umfassen;
und
(ii) Biomoleküle, die durch Reaktion einer oxidierten Dihydroxyphenylgruppe mit einer in dem Biomolekül vorliegenden Amino- oder Thiolgruppe auf das Polyelektrolyt-Copolymer aufgepfropft sind.

2. Verbundwerkstoff nach Anspruch 1, wobei
sich die Einheiten (A) aus der Polymerisation von einem oder mehreren Typen von Monomeren der Formel (1a) ergeben: 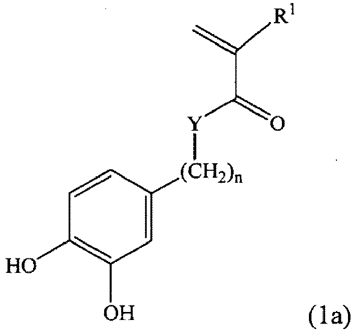 wobei R¹ für ein Wasserstoffatom oder eine Alkylgruppe, die unsubstituiert oder durch einen oder mehrere Substituenten substituiert sein kann, steht, Y für einen zweiwertigen Linker steht und n für eine ganze Zahl mit einem Wert von 0 bis 5 steht.

3. Verbund nach einem der Ansprüche 1 oder 2, wobei
sich Einheiten (B1) oder (B2) aus der Polymerisation von einem oder mehreren Typen von Monomeren der Formel (6) ergeben: 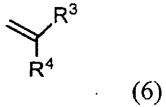 wobei R³ aus Wasserstoff oder Alkyl, das unsubstituiert oder durch einen oder mehrere Substituenten substituiert werden kann, ausgewählt ist und R⁴ entweder
(i) im Fall der Einheit (B1) für eine kationische Gruppe oder eine Alkyl-, Aryl-, Ester- oder Amidgruppe, die durch mindestens eine kationische Gruppe substituiert ist, oder
(ii) im Fall der Einheit (B2) für eine anionische Gruppe oder eine Alkyl-, Aryl-, Ester- oder Amidgruppe, die durch mindestens eine anionische Gruppe substituiert ist,
steht.

4. Verbund nach einem der Ansprüche 1 bis 3, wobei das Polyelektrolyt-Copolymer ferner Einheiten (C) umfasst, die sich aus der Polymerisation von einem oder mehreren Typen von Monomeren der Formel (7) ergeben: 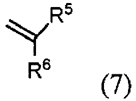 wobei R⁵ aus Wasserstoff oder Alkyl, das unsubstituiert oder substituiert sein kann, ausgewählt ist und R⁶ aus einer Estergruppe; einer Amidgruppe; einer Aminogruppe; einer Arylgruppe, die durch eine polare Gruppe substituiert sein kann; einer Alkylgruppe, die durch eine polare Gruppe oder durch ein Glycosid substituiert sein kann; oder einer heterocyclische Gruppe, die durch eine polare Gruppe substituiert sein kann, ausgewählt ist.

5. Verbundwerkstoff nach einem der Ansprüche 1 bis 4, wobei das Polyelektrolyt-Copolymer verzweigte oder hyperverzweigte Polyelektrolytmoleküle umfasst, wobei mindestens zwei Polyelektrolyt-Polymerketten durch eine über eine in der Einheit (A) enthaltene Dihydroxyphenylgruppe gebildete kovalente Bindung miteinander verknüpft sind.

6. Verbundwerkstoff nach einem der Ansprüche 1 bis 5, umfassend:
(i) eine oxidierte Form des Polyelektrolyts, wobei die Dihydroxyphenylgruppen in dem Polyelektrolyt-Copolymer teilweise oder ganz zu ihrer Chinon-Form oxidiert worden sind;
(ii) Teilchen aus einem Metall und/oder Teilchen aus einem Metallsalz und
(iii) Biomoleküle, die durch Reaktion einer oxidierten Dihydroxyphenylgruppe mit einer in dem Biomolekül vorliegenden Amino- oder Thiolgruppe auf das Polyelektrolyt-Copolymer aufgepfropft sind.

7. Verfahren zur Herstellung des Verbundwerkstoffs nach einem der Ansprüche 1 bis 5, bei dem man
(i) ein Polyelektrolyt-Copolymer mit
(ii) einer Lösung eines Biomoleküls oder einer Mischung von verschiedenen Biomolekülen mit mindestens einer Amino- oder Thiolgruppe zur Ermöglichung der chemischen Aufpfropfung des Biomoleküls bzw. der Biomoleküle auf das Polyelektrolyt-Copolymer
in Berührung bringt.

8. Verfahren nach Anspruch 7, bei dem man:
(i) ein Polyelektrolyt-Copolymer mit
(ii) einer Lösung eines Metallsalzes zur Bewirkung der in-situ-Reduktion der Metallionen des Metallsalzes durch Dihydroxyphenylgruppen in dem Polyelektrolyt-Copolymer zur Bildung von Metallpartikeln und in-situ-Ausfällung eines Metallsalzes durch einen Ionenaustausch mit dem Gegenionen des Polyelektrolyt-Copolymers
(iii) einer Lösung eines Biomoleküls oder einer Mischung von verschiedenen Biomolekülen mit mindestens einer Amino- oder Thiolgruppe zur Ermöglichung der chemischen Aufpfropfung des Biomoleküls bzw. der Biomoleküle auf das Polyelektrolyt-Copolymer
in Berührung bringt.

9. Substrat, das auf einer Oberfläche davon einen Verbundwerkstoff nach einem der Ansprüche 1 bis 6 trägt.

10. Substrat nach Anspruch 9, wobei es sich bei der Oberfläche um eine Metalloberfläche handelt.

11. Substrat nach Anspruch 9 oder 10, bei dem es sich um eine medizinische Vorrichtung handelt.

12. Verwendung eines Verbundmaterials nach einem der Ansprüche 1 bis 6 zur antimikrobiellen und/oder antibakteriellen Ausrüstung eines Substrats.

## Revendications

1. Matériau composite comprenant :
(i) un copolymère polyélectrolyte comprenant :
(a) un premier type de motifs identiques ou différents (A) comprenant chacun un ou plusieurs groupes dihydroxyphényle de façon telle que des chaînes latérales qui contiennent au moins un groupe dihydroxyphényle chacune sont présentes le long du squelette du copolymère polyélectrolyte, une partie ou la totalité des groupes dihydroxyphényle ayant été oxydés en leur forme quinone ; et
(b1) un second type de motifs identiques ou différents (B1) comprenant chacun une fraction cationique ou
(b2) un second type de motifs identiques ou différents (B2) comprenant chacun une fraction anionique
et
(ii) des biomolécules greffées sur le copolymère polyélectrolyte par l'intermédiaire d'une réaction d'un groupe dihydroxyphényle oxydé avec un groupe amino ou thiol présent dans la biomolécule.

2. Matériau composite selon la revendication 1 dans lequel les motifs (A) résultent de la polymérisation d'un ou plusieurs types de monomères de formule (la) : 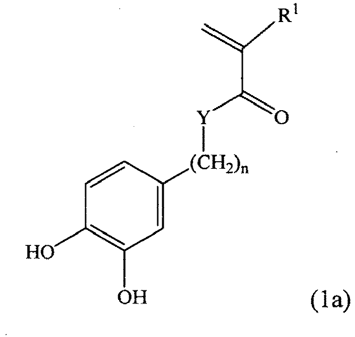 dans laquelle R¹ est un atome d'hydrogène ou un groupe alkyle qui peut être non substitué ou substitué par un ou plusieurs substituants, Y est un groupe de liaison divalent et n est un nombre entier choisi de 0 à 5.

3. Composite selon l'une quelconque des revendications 1 ou 2 dans lequel les motifs (B1) ou (B2) résultent de la polymérisation d'un ou plusieurs types de monomères de formule (6) : 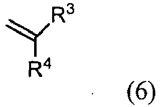 dans laquelle R³ est choisi entre l'atome d'hydrogène et un groupe alkyle qui peut être non substitué ou substitué par un ou plusieurs substituants et R⁴ est soit
(i) un groupe cationique ou un groupe alkyle, aryle, ester ou amide substitué au moins par un groupe cationique dans le cas du motif (B1) ; soit
(ii) un groupe anionique ou un groupe alkyle, aryle, ester ou amide substitué au moins par un groupe anionique dans le cas du motif (B2).

4. Composite selon l'une quelconque des revendications 1 à 3 dans lequel le copolymère polyélectrolyte comprend en outre des motifs (C) résultant de la polymérisation d'un ou plusieurs types de monomères de formule (7) : 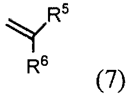 dans laquelle R⁵ est choisi entre l'atome d'hydrogène et un groupe alkyle qui peut être non substitué ou substitué et R⁶ est choisi parmi un groupe ester ; un groupe amide ; un groupe amino ; un groupe aryle qui peut être substitué par un groupe polaire ; un groupe alkyle qui peut être substitué par un groupe polaire ou par un glycoside ; ou un groupe hétérocyclique qui peut être substitué par un groupe polaire.

5. Matériau composite selon l'une quelconque des revendications 1 à 4 dans lequel le copolymère polyélectrolyte comprend des molécules de polyélectrolyte ramifiées ou hyper-ramifiées, au moins deux chaînes de polymère polyélectrolyte étant reliées l'une à l'autre par une liaison covalente formée par l'intermédiaire d'un groupe dihydroxyphényle contenu au sein du motif (A).

6. Matériau composite selon l'une quelconque des revendications 1 à 5 comprenant :
(i) une forme oxydée du polyélectrolyte, une partie ou la totalité des groupes dihydroxyphényle dans le copolymère polyélectrolyte ayant été oxydés en leur forme quinone ;
(ii) des particules d'un métal et/ou des particules d'un sel métallique ; et
(iii) des biomolécules greffées sur le copolymère polyélectrolyte par l'intermédiaire d'une réaction d'un groupe dihydroxyphényle oxydé avec un groupe amino ou thiol présent dans la biomolécule.

7. Procédé pour la production du matériau composite selon l'une quelconque des revendications 1 à 5, comprenant les étapes consistant à mettre en contact
(i) un copolymère polyélectrolyte avec
(iii) une solution d'une biomolécule ou d'un mélange de différentes biomolécules contenant au moins un groupe amino ou thiol pour permettre le greffage chimique de la ou des biomolécules sur le copolymère polyélectrolyte.

8. Procédé selon la revendication 7 comprenant l'étape consistant à mettre en contact :
(i) un copolymère polyélectrolyte avec
(ii) une solution d'un sel métallique pour provoquer la réduction *in situ* des ions métalliques du sel métallique par des groupes dihydroxyphényle dans le copolymère polyélectrolyte pour former des particules métalliques et la précipitation *in situ* d'un sel métallique par un échange d'ions avec les contre-ions du copolymère polyélectrolyte
(iii) une solution d'une biomolécule ou d'un mélange de différentes biomolécules contenant au moins un groupe amino et/ou thiol pour permettre le greffage chimique de la ou des biomolécules sur le copolymère polyélectrolyte.

9. Substrat portant un matériau composite selon l'une quelconque des revendications 1 à 6 sur une de ses surfaces.

10. Substrat selon la revendication 9, dans lequel la surface est une surface métallique.

11. Substrat selon les revendications 9 ou 10, qui est un dispositif médical.

12. Utilisation d'un matériau composite selon l'une quelconque des revendications 1 à 6 pour conférer des propriétés antimicrobiennes et/ou antibactériennes à un substrat.
